# FASCICULE DE BREVET EUROPEEN

(11) **EP 4 457 544 B1**
(45) Date de publication et mention de la délivrance du brevet: **25.11.2026**
(21) Numéro de dépôt: 22844653.0
(22) Date de dépôt: 28.12.2022
(51) Int. Cl.: G01T 1/164, G01T 1/29

(54) **PROCÉDÉ DE FORMATION D'UNE IMAGE GAMMA, PAR COMBINAISON ENTRE MODALITÉ D'IMAGERIE COMPTON ET MASQUE CODÉ**
VERFAHREN ZUR ERZEUGUNG EINES GAMMABILDES DURCH KOMBINATION EINER COMPTON-BILDGEBUNGSMODALITÄT UND EINER CODIERTEN MASKENBILDGEBUNGSMODALITÄT
METHOD FOR FORMING A GAMMA IMAGE BY COMBINING A COMPTON IMAGING MODALITY AND A CODED MASK IMAGING MODALITY

(30) Priorité: 29.12.2021 FR 2114653
(43) Date de publication de la demande: 06.11.2024
(73) Titulaire: Commissariat à l'Energie Atomique et aux Energies Alternatives, 75015 Paris (FR)
(72) Inventeur: MONTEMONT, Guillaume, 38054 Grenoble cedex 09 (FR)
(74) Mandataire: INNOV-GROUP
(86) Numéro de dépôt international: PCT/EP2022/087975
(87) Numéro de publication internationale: WO 2023/126454

(56) Documents cités:
- US-A1- 2014 301 535
- US-A1- 2021 165 112
- MONTEMONT GUILLAUME ET AL: "NuVISION: a Portable Multimode Gamma Camera based on HiSPECT Imaging Module", 2017 IEEE NUCLEAR SCIENCE SYMPOSIUM AND MEDICAL IMAGING CONFERENCE (NSS/MIC), IEEE, 21 October 2017 (2017-10-21), pages 1 - 3, XP033445981, DOI: 10.1109/NSSMIC.2017.8532713
- HU YIFAN ET AL: "Design and performance evaluation of a 4[pi]-view gamma camera with mosaic-patterned 3D position-sensitive scintillators", NUCLEAR INSTRUMENTS & METHODS IN PHYSICS RESEARCH. SECTION A, ELSEVIER BV * NORTH-HOLLAND, NL, vol. 1023, 10 November 2021 (2021-11-10), XP086892207, ISSN: 0168-9002, [retrieved on 20211110], DOI: 10.1016/J.NIMA.2021.165971

## Description

### DOMAINE TECHNIQUE

Le domaine technique de l'invention est l'imagerie X ou gamma, et plus particulièrement la reconstruction de la position de sources irradiantes à l'aide d'une image acquise par une gamma caméra.

### ART ANTERIEUR

Les gamma caméras sont des dispositifs permettant de former une image pour établir une cartographie de sources irradiantes dans un environnement donné. Une première application est la visualisation d'une source d'irradiation dans un organisme, à des fins de diagnostic médical. Une autre application est la localisation d'une source irradiante dans une installation, et en particulier dans une installation nucléaire.

Le recours à des gamma caméras dans le domaine médical est relativement ancien. Dans le nucléaire, ce type de dispositif a été développé dans les années 1990, et tend à se répandre dans les installations nucléaires, à des fins de caractérisation radiologique. L'objectif est d'identifier les principales sources irradiantes présentes dans une installation. En effet, les sources d'irradiation ne sont pas réparties de façon homogène. Elles sont souvent concentrées localement, sous la forme de "points chauds", terme usuel dans le domaine de la radioprotection. Une gamma caméra présente l'intérêt d'effectuer une localisation, à distance, de ces points chauds.

Certaines gamma caméras sont constituées d'une matrice bidimensionnelle de pixels, reliée à un matériau détecteur. Le matériau détecteur est généralement un matériau semi-conducteur, par exemple CdTe ou CdZnTe. Sous l'effet d'une interaction d'un rayonnement ionisant dans le matériau détecteur, un ou plusieurs pixels génèrent une impulsion électrique, dont l'amplitude est corrélée avec l'énergie libérée par le rayonnement lors de l'interaction. Chaque pixel est raccordé à un circuit électronique de traitement des impulsions.

Chaque pixel est formé d'une électrode, qui fait usuellement fonction d'anode. Lorsqu'un rayonnement incident interagit dans le matériau détecteur, des électrons sont libérés dans le matériau détecteur. Les électrons sont collectés par une anode. Cette dernière génère une impulsion dont l'amplitude dépend du nombre d'électrons collectés par l'anode, ce nombre étant généralement proportionnel à une énergie perdue par le rayonnement ionisant dans le matériau détecteur. Ainsi, à partir de l'amplitude d'une impulsion, l'énergie perdue par le rayonnement lors de l'interaction peut être estimée.

Par ailleurs, il est possible de localiser la position d'une interaction selon la profondeur du matériau détecteur, c'est-à-dire perpendiculairement à la matrice d'anodes. L'estimation de la profondeur de l'interaction est par exemple décrite dans Montemont et al. « Studying spatial resolution of CZT detectors using sub-pixel positioning for SPECT », IEEE transactions on nuclear science, Vol. 61, N°5, octobre 2014.

Certaines gamma caméra mettent en œuvre un collimateur de type masque codé, formé d'un motif prédéfini. Le motif peut par exemple être périodique et comporter une maille élémentaire reproduite par rotation et/ou translation. Le motif permet une alternance entre des parties absorbantes entre lesquelles s'étendent des ouvertures. L'ensemble forme un masque codé. Le collimateur permet une délimitation d'un champ observé. A partir d'une image formée sur la gamma caméra, un opérateur de rétroprojection permet d'obtenir une position de la source irradiante dans le champ d'observation. Avec ce type de gamma caméra, seules les interactions provenant de rayonnement émis par la source, et non diffusés préalablement à l'interaction dans le matériau détecteur, contribuent à l'information utile pour localiser les sources irradiantes dans le champ d'observation.

Un autre type de gamma caméra met à profit des interactions, temporellement coïncidentes, résultant de la diffusion Compton (diffusion inélastique) d'un rayonnement X ou gamma dans le matériau détecteur. Généralement, la première interaction correspond à une diffusion Compton, tandis que la deuxième interaction est une absorption photoélectrique. La connaissance des coordonnées de deux interactions, résultant de la diffusion d'un photon ionisant dans le matériau détecteur, ainsi que des énergies libérées respectivement par chaque interaction permet d'estimer une trajectoire du photon incident. Un avantage des gamma caméras Compton est l'absence de collimation, ce qui confère un champ d'observation de 4 π stéradians. Un autre avantage est la possibilité d'obtenir un dispositif compact. Le document US2014/301535 décrit un exemple de gamma caméra Compton.

La publication Montemont, G. « NuVision : a portable multimode gamma camera based on HiSPECT imaging module », décrit une gamma caméra multimode couplant une modalité d'imagerie par masque codé et une modalité d'imagerie de type Compton. Dans cette publication, on décrit deux reconstructions indépendantes : l'une basée sur les photons détectés selon la modalité d'imagerie par masque codé, l'autre basée sur les photons détectés par imagerie Compton. Chaque reconstruction permet de positionner des sources irradiantes dans l'espace.

L'invention décrite ci-après permet une combinaison des modalités d'imagerie par masque codé et par imagerie de diffusion Compton., l'algorithme de reconstruction combinant les interactions détectées par la modalité d'imagerie par masques codés ainsi que par la modalité d'imagerie Compton.

### EXPOSE DE L'INVENTION

Un premier objet de l'invention est un procédé d'une estimation de positions de sources irradiantes dans un champ d'observation, à l'aide d'une gamma caméra, la gamma caméra comportant :
- un matériau de détection;
- des pixels, répartis selon une surface de détection du matériau de détection, chaque pixel étant configuré pour former un signal de détection sous l'effet d'une détection d'une interaction d'un photon ionisant dans le matériau de détection ;
- un collimateur, de type masque codé, disposé face au matériau de détection, et définissant un premier champ d'observation, inclus dans le champ d'observation de la gamma caméra ;
- une unité de localisation, configurée pour assigner une position à chaque interaction dans le matériau de détection, à partir du signal de détection généré par ladite interaction;
- une unité de spectrométrie, configurée pour assigner une énergie à chaque interaction détectée, à partir du signal de détection généré par ladite interaction ;
- une unité de coïncidence, configurée pour identifier chaque interaction comme une interaction simple ou une interaction multiple, une interaction multiple étant formées de deux interactions de diffusion détectées en coïncidence temporelle ;
- une mémoire, configurée pour mémoriser des paramètres d'interactions détectées;
le procédé comportant les étapes suivantes:
- a) acquisition de signaux de détection par les pixels durant une période d'acquisition, chaque signal de détection étant associé à une interaction détectée ;
- b) en fonction des signaux de détection, assignation d'une position et d'une énergie à chaque interaction détectée ;
- c) identification de chaque interaction détectée comme étant une interaction simple ou une interaction multiple ;
- d) mémorisation, par la mémoire, des paramètres de chaque interaction, les paramètres de chaque interaction comportant la position et l'énergie de ladite interaction ;
le procédé étant caractérisé en ce qu'il comportant également
- e) sélection d'un isotope parmi une listes d'isotopes ;
- f) en fonction de l'énergie assignée à chaque interaction, simple ou multiple, calcul d'une probabilité d'émission par l'isotope;
- g) à partir des paramètres de chaque interaction, calcul d'une probabilité d'émission du photon ayant généré l'interaction, depuis différents points du champ d'observation ;
- h) prise en compte d'une probabilité a priori d'émission d'un photon pour l'isotope sélectionné, depuis les différents points du champ d'observation;
- i) en fonction des probabilités résultant de g) et h), calcul d'une distribution spatiale de intensité d'émission dans le premier champ d'observation pour l'isotope sélectionné lors de l'étape e).

Les étapes h) et i) peuvent être effectuées de façon itérative, de telle sorte qu'à chaque itération :
- l'étape h) comporte une prise en compte d'une distribution spatiale de l'intensité d'émission de l'isotope initiale ou résultant d'une itération précédente ;
- l'étape i) comporte une mise à jour de la distribution spatiale de l'intensité d'émission pour l'isotope sélectionné en fonction :
   - de la probabilité a priori d'émission résultant de l'étape h) de la même itération ;
   - des probabilités résultant des étapes f) et g).

Selon un mode de réalisation, lors de l'étape e), l'isotope est
- sélectionné en fonction des énergies respectivement assignées à différentes interactions détectées ;
- ou sélectionné arbitrairement.

Selon un mode de réalisation, les étapes f) à i) sont effectuées successivement pour différents isotopes sélectionnés.

Selon un mode de réalisation, l'étape f) est mise en œuvre en calculant :
- une probabilité que le photon ayant généré l'interaction soit un photon direct, émis par l'isotope, selon une énergie d'émission de l'isotope et ayant atteint le matériau de détection en conservant l'énergie d'émission, sans traverser une partie absorbante du collimateur ;
- une probabilité que le photon ayant généré l'interaction soit un photon indirect, émis par l'isotope, selon une énergie d'émission de l'isotope, et ayant atteint le matériau de détection avec une énergie inférieure à l'énergie d'émission et/ou en traversant une partie absorbante du collimateur.

Selon un mode de réalisation, l'étape f) comporte une prise en compte, pour chaque énergie d'émission de l'isotope :
- une distribution de probabilités de détection d'une interaction, dans le matériau détecteur, selon différentes énergies, en supposant que le photon ayant généré l'interaction est un photon direct ;
- une distribution de probabilités de détection d'une interaction, dans le matériau détecteur, selon différentes énergies, en supposant que le photon ayant généré l'interaction est un photon indirect ;
les distributions de probabilités de détection étant préalablement calculées en considérant une interaction simple et une interaction multiple.

Selon un mode de réalisation, l'étape g) comporte :
- lorsque l'interaction est simple, sélection d'un premier modèle de réponse spatiale de la caméra, la probabilité de position d'émission depuis différents points du premier champ d'observation étant déterminée en fonction du premier modèle de réponse spatiale et de la position de l'interaction dans le matériau détecteur ;
- lorsque l'interaction est multiple, sélection d'un deuxième modèle de réponse spatiale de la caméra, la probabilité de position d'émission depuis différents points du champ d'observation étant déterminée en fonction du deuxième modèle de réponse spatiale et de l'énergie ainsi que la position des interactions détectées en coïncidence temporelle formant l'interaction multiple dans le matériau détecteur.

Le premier modèle de réponse spatiale peut déterminer, pour différentes positions bidimensionnelles d'interactions simples établies parallèlement à la surface de détection, une probabilité de détection d'un photon émis à partir de différents points du premier champ d'observation, chaque interaction simple étant une interaction non considérée comme multiple. Le deuxième modèle de réponse spatiale détermine, pour différentes positions tridimensionnelles d'interactions détectées en coïncidence temporelle, formant l'interaction multiple, et pour différentes valeurs d'énergie desdites interactions, une probabilité de détection d'un photon émis à partir de différents points du champ d'observation.

Un deuxième objet de l'invention est une gamma caméra, destinée à détecter une présence de sources irradiantes dans un champ d'observation, la gamma caméra comportant :
- un matériau de détection;
- un collimateur à masque codé, s'étendant face au matériau de détection ;
- des pixels, répartis sur une surface de détection du matériau semi-conducteur, chaque pixel étant configuré pour former un signal de détection sous l'effet d'une détection d'une interaction d'un photon ionisant dans le matériau semi-conducteur ;
- une unité de localisation, configurée pour assigner une position à chaque interaction dans le matériau semi-conducteur, à partir d'un signal de détection généré par ladite interaction, de façon à obtenir une localisation selon la surface de détection et selon une direction perpendiculaire à la surface de détection ;
- une unité de spectrométrie, configurée pour assigner une énergie à chaque interaction détectée, à partir du signal de détection généré par ladite interaction ;
- une unité de coïncidence, de façon à identifier chaque interaction comme une interaction simple ou une interaction multiple, une interaction multiple étant formées de deux interactions détectées en coïncidence temporelle ;
- une mémoire, configurée pour mémoriser une quantité d'interactions détectées;
- une unité de traitement, configurée pour configurée pour traiter les interactions mémorisées dans la mémoire, l'unité de traitement étant configurée pour mettre en œuvre les étapes d) à i) d'un procédé selon le premier objet de l'invention.

L'invention sera mieux comprise à la lecture de l'exposé des exemples de réalisation présentés, dans la suite de la description, en lien avec les figures listées ci-dessous.

### FIGURES

Les figures 1A et 1B schématisent les principaux composants d'une gamma caméra permettant une mise en œuvre de l'invention.
Les figures 2A et 2B représentent deux configurations de diffusion, selon lesquelles deux interactions sont alternativement considérées comme une diffusion et une absorption.
La figure 3A est une matrice illustrant une réponse spectrale de la gamma dans le cas d'une interaction simple dans le matériau détecteur, le photon ayant interagi ayant conservé l'énergie d'émission.
La figure 3B est une matrice illustrant une réponse spectrale de la gamma dans le cas d'une interaction simple dans le matériau détecteur, le photon ayant interagi n'ayant pas conservé l'énergie d'émission ou étant passé à travers une partie absorbante du collimateur.
La figure 3C est une matrice illustrant une réponse spectrale de la gamma dans le cas d'une interaction multiple dans le matériau détecteur, le photon ayant diffusé dans le matériau détecteur ayant conservé l'énergie d'émission.
La figure 3D est une matrice illustrant une réponse spectrale de la gamma dans le cas d'une interaction multiple dans le matériau détecteur, le photon ayant diffusé dans le matériau détecteur n'ayant pas conservé l'énergie d'émission ou étant passé à travers une partie absorbante du collimateur.
La figure 4 schématise les principales étapes d'un procédé selon l'invention.
La figure 5A est un graphique permettant d'estimer l'angle de diffusion en fonction de l'énergie de deux interactions résultant de la diffusion.
La figure 5B est un graphique permettant d'estimer une probabilité de diffusion en fonction de l'énergie de deux interactions résultant de la diffusion.
La figure 6 représente une estimation d'une surface conique comportant la trajectoire d'un photon avant une diffusion.
La figure 7 illustre le premier champ d'observation et le deuxième champ d'observation.
Les figures 8A, 8C et 8E sont des exemples de position de sources reconstruite à partir d'une première modalité d'imagerie (imagerie par masque codé), d'une deuxième modalité reconstruction (imagerie Compton), et une combinaison de la première modalité et de la deuxième modalité : sur chacune de ces figures, la reconstruction de l'image a été effectuée avec une seule itération
Les figures 8B, 8D et 8F sont des exemples de position de sources reconstruite à partir d'une première modalité d'imagerie (imagerie par masque codé), d'une deuxième modalité reconstruction (imagerie Compton), et une combinaison de la première modalité et de la deuxième modalité : sur chacune de ces figures, la reconstruction de l'image a été effectuée selon plusieurs itérations.
Les figures 9A et 9B illustrent une variante d'une gamma caméra permettant une mise en œuvre de l'invention.

### EXPOSE DE MODES DE REALISATION PARTICULIERS

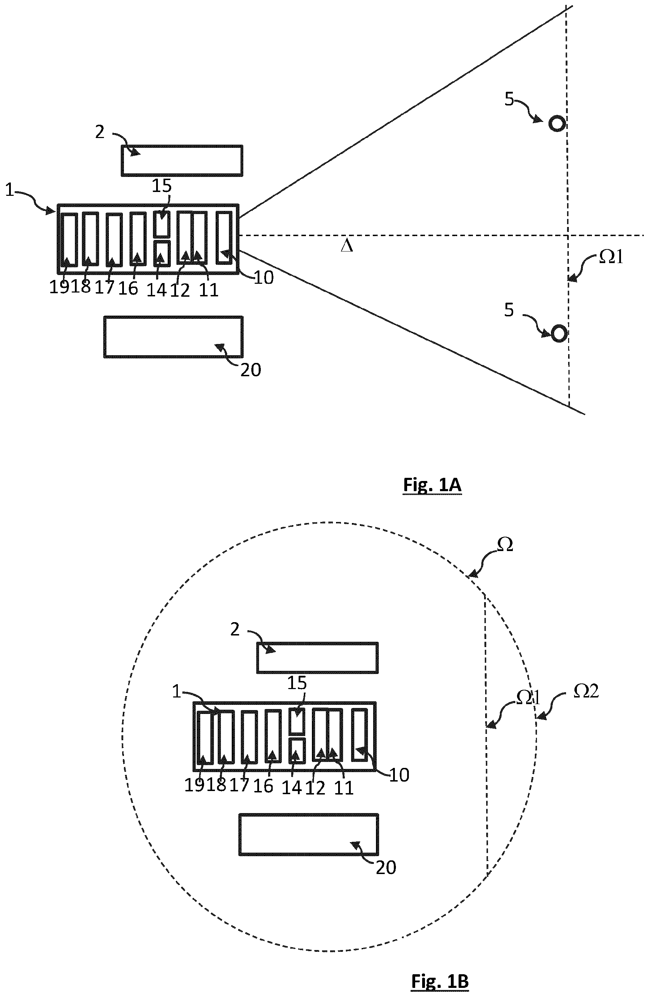

La figure 1A représente une gamma caméra 1, ou gamma caméra, permettant une mise en œuvre de l'invention. La gamma caméra est configurée pour détecter des photons ionisants, de type X ou gamma, dont l'énergie est généralement comprise entre 10 keV et 10 MeV. L'objectif de la gamma caméra est de localiser des sources irradiantes présentes dans le champ d'observation Ω. Le champ d'observation Ωs'étend autour d'un axe central Δ. La gamma caméra peut être couplée à une caméra visible 2, permettant de former une image visible du champ d'observation. Le terme gamma caméra correspond à un imageur présentant un champ d'observation et configuré pour former une image objet *O* permettant une localisation de sources d'irradiation dans le champ d'observation.

La gamma caméra comporte un matériau détecteur 11, usuellement un matériau semi-conducteur permettant la création de porteurs de charge (paires électrons/trous) lors d'une interaction avec un rayonnement X ou gamma. Il peut notamment s'agir de CdTe ou CdZnTe.

La gamma caméra comporte des pixels 12, répartis selon une surface de détection. Dans l'exemple représenté, les pixels 12 sont coplanaires et répartis selon une matrice bidimensionnelle, de préférence régulière. D'autres possibilités sont possibles et décrites par la suite. La matrice peut par exemple comporter quelques dizaines voire centaines de pixels.. Chaque pixel 12 est un détecteur de rayonnement élémentaire. Dans l'exemple décrit, chaque pixel 12 est une anode, dont la polarisation permet de collecter des électrons produits lors d'une interaction survenant dans le matériau détecteur.

Lorsqu'un photon ionisant interagit dans le matériau détecteur 11, des porteurs de charge, par exemple des électrons, migrent vers un ou plusieurs pixels, ces derniers étant des pixels touchés : chaque pixel touché est un pixel qui collecte des porteurs de charge. Une interaction peut donner lieu à un ou plusieurs pixels touchés. Lorsque les pixels sont de petite taille, plusieurs pixels peuvent être touchés au cours d'une interaction. Lorsque les pixels sont de grande taille, le nombre de pixels touchés se réduit et peut se limiter à un seul pixel touché. Lors de leur migration vers un pixel touché, les porteurs de charges peuvent génèrer un signal, usuellement désigné signal induit, sur les pixels adjacents du ou des pixels touchés.

D'une façon générale, chaque interaction donne lieu à la formation d'un signal de détection par au moins un pixel, et le plus souvent plusieurs pixels. Le signal de détection peut être un signal résultant de la collecte de porteurs de charge par un ou plusieurs pixels 12 ou un signal induit par la migration de porteurs de charge à travers le matériau détecteur 11.

La gamma caméra comporte une unité de localisation 14, de façon à définir une position tridimensionnelle de chaque interaction dans le matériau détecteur 11.

Lorsque les pixels ont une surface importante, typiquement supérieure à 1 mm², l'unité de localisation peut mettre en œuvre une sous-pixellisation, afin d'attribuer une position bidimensionnelle (*x,y*) de chaque interaction détectée, parallèlement à la surface de détection 12, à partir de signaux de détection formés par plusieurs pixels 12 suite à chaque interaction. Ainsi, chaque pixel est virtuellement divisé en pixels virtuels. La subdivision en pixels virtuels permet d'améliorer la résolution spatiale. Un tel procédé est par exemple décrit dans les publications Warburton W.K, « An approach to sub-pixel spatial resolution in room temperature X-ray detector arrays with good energy resolution » ainsi que dans Montemont et al. « Studying spatial resolution of CZT detectors using sub-pixel positioning for SPECT », IEEE transactions on nuclear science, Vol. 61, N°5, octobre 2014 ou encore dans le brevet US9322937B2. En utilisant ces procédés, la taille des pixels virtuels peut atteindre par exemple 0.5 mm * 0.5 mm, ou 0.1 mm par 0.1 mm. Le recours la sous-pixellisation ne se justifie que lorsque les pixels 12 ont une surface considérée comme trop élevée. Par la suite, le terme pixel désigne indifféremment un pixel virtuel et un pixel physique.

L'unité de localisation 14 peut être configurée pour établir une profondeur d'interaction selon un axe perpendiculaire à la surface de détection du matériau de détection 11. La profondeur d'interaction peut par exemple être déterminé en fonction du signal de détection, ou des signaux de détection, générés par le ou les pixels ayant collecté les porteurs de charge. La profondeur d'interaction est déterminée lorsque le matériau de détection est suffisamment épais, par exemple au-delà d'une épaisseur de 1 mm. Lorsque le matériau est considéré comme fin, la profondeur d'interaction est fixe dans tout le matériau. Le détecteur peut être composé de différentes couches de détection fines et distantes l'une de l'autre, et de préférence parallèles les unes aux autres. Dans ce cas, à chaque couche est assignée une coordonnée d'interaction perpendiculairement à la surface de détection.

Sous l'effet de la collecte de porteurs de charge, chaque pixel 12 génère une impulsion dont l'amplitude dépend de l'énergie libérée, dans le matériau détecteur, par un photon ionisant, au cours d'une interaction, cette énergie étant usuellement désignée « énergie de l'interaction ». La gamma-caméra 1 comporte une unité de spectrométrie 15. L'unité de spectrométrie permet une estimation aussi précise que possible de l'amplitude des impulsions résultant de la collecte de porteurs de charge suite à une interaction. L'unité de spectrométrie peut comporter aussi bien des moyens électroniques (circuit de mise en forme d'impulsion, analyseur multicanal, convertisseur analogique numérique) que des moyens logiciels. L'estimation de l'amplitude d'une impulsion permet d'estimer l'énergie de l'interaction. Cette énergie doit être estimée aussi précisément que possible. La plage d'énergie adressée est généralement comprise entre 10 keV et quelques centaines de keV, voire quelques MeV. Il est souhaitable que la précision de l'énergie soit de l'ordre du %, voire inférieure.

Ainsi, l'unité de spectrométrie 15 permet d'obtenir un spectre en énergie des interactions détectées par chaque pixel. Chaque interaction est ainsi classée dans un canal d'énergie *c*. Chaque canal d'énergie *c* s'étend entre *E* ± *δE*. 2*δE* correspond alors à la largeur spectrale de chaque canal d'énergie. Par exemple, 2*δE* = 0,2 *keV.* En fonction de l'énergie des photons détectés, on peut identifier les isotopes responsables de l'irradiation. L'énergie de chaque interaction peut également faire l'objet d'un traitement mettant en œuvre une réponse spectrale de la gamma caméra, comme décrit par la suite.

La gamma caméra est bimodale. Elle est configurée pour exploiter les interactions détectées dans le matériau détecteur 11 pour reconstruire une position de sources irradiantes dans le champ d'observation, et cela en utilisant une modalité de reconstruction dépendant de chaque interaction détectée. La gamma caméra comporte un collimateur 10, de type masque codé, tel que décrit dans l'art antérieur.

Selon une première modalité, les interactions détectées résultent de photons s'étant propagés à travers le collimateur 10 avant d'atteindre le matériau de détection. Cette première modalité permet une localisation de sources irradiantes potentiellement présentes dans un premier champ d'observation Ω1. Chaque point du premier champ d'observation peut être projeté à travers tout le masque, sur le détecteur. Cela signifie qu'un rayonnement émis par chaque point du premier champ, projeté à travers tout le masque codé 10, atteint le matériau de détection. Les interactions exploitées par la première modalité sont des interactions dites simples, au sens ou elles ne surviennent pas en coïncidence temporelle : elles sont détectées à des instants différents. Le premier champ d'observation Ω1 est représenté sur la figure 1B.

Selon une deuxième modalité, dite d'imagerie Compton, les interactions détectées résultent de photons émis autour de la gamma caméra, et interagissant dans le matériau détecteur 11 par diffusion Compton. De façon connue, suite à une diffusion Compton, un photon diffusé se propage selon un angle de diffusion par rapport à la trajectoire incidente au matériau détecteur. Lorsque le photon diffusé est absorbé dans le matériau détecteur, il est possible d'estimer la trajectoire incidente. La survenue d'une diffusion inélastique (ou diffusion Compton), suivie d'une absorption du photon diffusé, engendre deux interactions qui sont détectées simultanément, c'est-à-dire temporellement coïncidente. La connaissance de la position et de le l'énergie de chaque interaction permet une estimation de la trajectoire incidente du photon, selon l'expression : $cos α = 1 - {m}_{e} {c}^{2} \left[\frac{1}{{E}_{2}}-\frac{1}{{E}_{1} + {E}_{2}}\right]$ (1) où :
- *α* est un angle entre la trajectoire du photon incident au matériau détecteur 11 et une droite reliant la position des deux interactions dans le matériau détecteur. Il s'agit de l'angle de diffusion.
- *E*₁ et *E*₂ sont les énergies respectives de la première interaction et de la deuxième interaction, prises dans l'ordre chronologique.
- *mₑ* est la masse d'un électron ;
- c est la célérité de la lumière dans le vide.

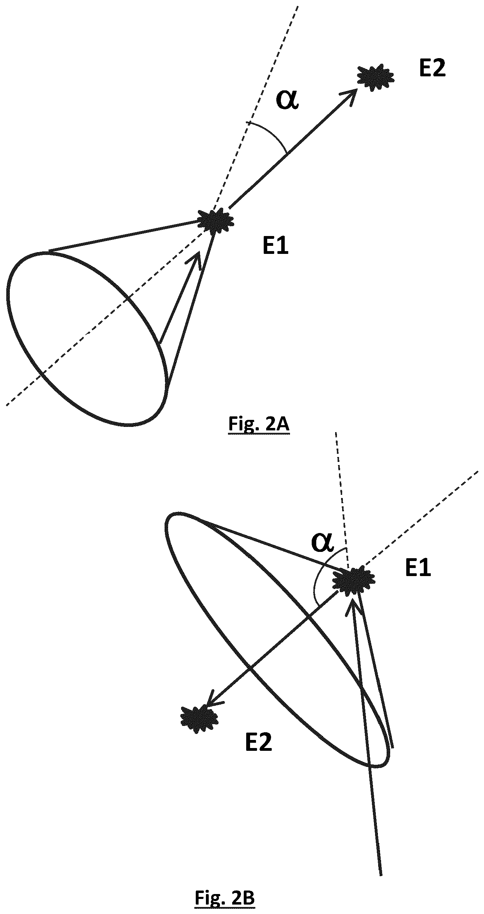

Sur les figures 2A et 2B, on a représenté l'angle *α* entre la trajectoire incidente d'un photon et une droite séparant deux interactions générées sous l'effet de la diffusion inélastique du photon dans le matériau détecteur. Une première interaction, libérant une énergie *E*₁, correspond à une diffusion selon un angle de diffusion α. L'énergie *E*₁ correspond à une partie de l'énergie du photon incident. Une deuxième interaction, libérant une énergie *E*₂, correspond à une absorption du rayonnement diffusé. L'énergie *E*₂ correspond à l'énergie du photon diffusé. Les deux interactions sont décalées dans le temps mais l'intervalle de temps les séparant est trop court pour être déterminé. Aussi, les deux interactions sont considérées comme simultanée ou en coïncidence temporelle et forment une interaction multiple d'énergie totale *E = E*₁ *+ E*₂. Il n'est pas possible d'identifier, parmi les deux interactions, celle qui est antérieure à l'autre. Aussi, lors de la détection simultanée de deux interactions, on considère successivement que chaque interaction est la première interaction (diffusion), puis la deuxième (absorption du photon diffusé). Il en résulte deux estimations différentes de surfaces comportant la trajectoire du photon incident. La figure 2A correspond à une diffusion « vers l'avant » , l'angle de diffusion *α* étant aigu, tandis que la figure 2B correspond à une rétrodiffusion (diffusion « vers l'arrière »), l'angle de diffusion *α* étant obtus. Les termes avant/arrière sont à considérer en fonction de la trajectoire du photon incident au détecteur. La probabilité de chaque configuration (diffusion vers l'avant ou rétrodiffusion) est régie par la relation de Klein-Nishina : $p \left(E, {E}_{2}\right) ∝ e \times \left({e}^{2}+{cos}^{2}\left(α\right)\right.$ (1') où $e = \frac{{E}_{2}}{E}$ et *α* est déduit de l'expression (1)

Sur les figures 2A et 2B, on a représenté deux surfaces coniques, chaque surface conique correspondant aux trajectoires potentielles du photon incident dans chaque cas de figure. Ainsi, à chaque interaction multiple, on assigne une ou deux surfaces coniques, pondérées par une probabilité résultant de la relation de Klein-Nishina. Après qu'un nombre suffisant d'interactions multiples a été détectée, la position de chaque source irradiante est déterminée par une intersection des différentes surfaces coniques assignées à chaque interaction multiple.

La deuxième modalité d'imagerie Compton permet la détection et la localisation de sources situées dans un deuxième champ d'observation, pouvant s'étendre selon un angle solide de 4π stéradians autour du matériau de détection.

Ainsi, la première modalité d'imagerie à travers le collimateur à masque codé adresse un premier champ d'observation relativement réduit, la deuxième modalité adresse un deuxième champ d'observation Ω2 s'étendant au-delà du premier champ d'observation Ω1 et s'étendant bien au-delà de ce dernier. Dans la suite, le premier champ d'observation Ω1 est une surface plane située à une distance prédéterminée de la gamma caméra. Le deuxième champ d'observation Ω2 est une sphère de rayon prédéterminé autour de la gamma caméra, et centrée sur le détecteur 11.

Le champ d'observation de la gamma caméra Ω correspond :
- soit au deuxième champ d'observation Ω2 ;
- soit au deuxième champ d'observation Ω2, tronqué par une partie plane correspondant au premier champ d'observation Ω1, et auquel s'ajoute le premier champ d'observation Ω1. Le champ d'observation de la gamma caméra Ω comporte une partie sphérique (partie du champ d'observation Ω2 sans recoupement avec le champ d'observation Ω1) et une partie plane, cette dernière correspondant au premier champ d'observation Ω1. Cf. figure 1B.
- Le premier champ d'observation et le deuxième champ d'observation comportent une partie commune, dans laquelle les deux modalités d'imagerie peuvent être combinées.

La première modalité peut être mise en œuvre à partir d'une localisation bidimensionnelle (c'est-à-dire parallèlement à la surface de détection) de chaque interaction simple. La deuxième modalité nécessite, de préférence, une localisation tridimensionnelle de chaque interaction multiple.

La gamma caméra comporte une unité de coïncidence temporelle 16, configurée pour assigner un instant de détection t à chaque interaction détectée. L'unité de coïncidence temporelle permet d'identifier les interactions simples (une seule interaction assignée à un instant) et les interactions multiples (plusieurs interactions assignées à un même instant).

La gamma caméra 1 comporte une mémoire 17, configurée pour mémoriser les interactions simples détectées à chaque instant t. A chaque interaction simple, on assigne les paramètres (*x, y, E*)
- les coordonnées (*x, y*) sont des coordonnées des pixels, réels ou virtuels, ayant détecté l'interaction, déterminées par l'unité de localisation 14 ;
- l'énergie E est l'énergie libérée par l'interaction, déterminée par l'unité de spectrométrie 15 ;

La mémoire est également configurée pour mémoriser les interactions multiples détectées à chaque instant *t.* A chaque interaction multiple, on assigne les paramètres (*x*₁, *y*₁, *z*₁, *x*₂, *y*₂, *z*₂, *E'*₁, *E'*₂ ).
- Les coordonnées (*x*₁, *y*₁, *z*₁, *x*₂, *y*₂, *z*₂) correspondent aux coordonnées des deux interactions de diffusion, formant l'interaction multiple, et détectées en coïncidence temporelle ;
- les énergies *E'*₁ et *E'*₂ détectées à chaque interaction de diffusion formant l'interaction multiple, dont l'énergie totale est *E*' *= E'*₁ *+ E'*₂.

La gamma caméra peut comporter une unité de formation d'image 18 configurée pour former une image gamma G à partir des interactions simples. L'image gamma G est définie selon des coordonnées (*x, y*), parallèlement à la surface de détection 12, chaque coordonnée (*x, y*) correspondant à un pixel 12. Chaque point *G*(*x, y*) de l'image gamma G correspond à une quantité d'interactions simples détectées par chaque pixel 12 de coordonnées (*x, y*).

Lorsqu'on met en œuvre le circuit de spectrométrie 15, la mémoire 17 peut mémoriser les énergies associées à chaque interaction détectée durant une période d'acquisition. La durée de la période d'acquisition peut être comprise entre quelques secondes, en cas de forte irradiation, ou quelques minutes, éventuellement quelques heures lorsque l'irradiation à laquelle est soumis le matériau détecteur 11 est faible. Dans le cas d'une interaction multiple, l'énergie de l'interaction est l'énergie totale précédemment évoquée, correspondant à la somme des énergies de chaque interaction de diffusion.

A partir des énergies détectées, une unité de sélection d'isotope 19 est configurée pour sélectionner un ou plusieurs isotopes susceptibles d'être présent dans le champ observé. Par la suite, l'indice i désigne un isotope. La sélection des isotopes est effectuée en fonction des probabilités d'émission d'énergie d'isotopes connus, préalablement mémorisées. On prend alors en compte les schémas de désintégration d'isotopes susceptibles de constituer les sources irradiantes du champ d'observation. Par schéma de désintégration d'un isotope, on entend l'énergie, ou les énergies, d'émission ainsi que les taux d'embranchement (probabilités d'émission d'un photon pour les différentes énergies d'émission). La sélection des isotopes peut se faire automatiquement par l'unité de sélection d'isotope 19, ou manuellement, la sélection étant effectuée par un opérateur.

Les différentes énergies détectées peuvent être présentées sous la forme d'un spectre de détection global. Le spectre de détection global est un histogramme des énergies des différentes interactions détectées, qu'il s'agisse d'interactions simples ou multiples. De façon usuelle, l'axe des abscisses correspond aux énergies (ou aux numéros de canal) et l'axe des ordonnées correspond aux nombres d'interactions (simples ou multiples) détectées pour chaque énergie. Le spectre comporte des pics, chaque pic correspondant à une énergie d'émission d'un isotope. A partir des pics, on sélectionne les isotopes *i* susceptibles d'être présents dans le champ d'observation. Le spectre de détection est établi à partir de l'ensemble des interactions, simples ou multiples. Le champ d'observation Ω est le deuxième champ d'observation Ω2 (i-e celui de la deuxième modalité) s'étendant au-delà du premier champ d'observation Ω1 (celui de la première modalité), auquel s'ajoute le premier champ d'observation Ω1.

Selon une possibilité, les isotopes situés dans le champ d'observation sont connus. Dans ce cas, l'utilisateur effectue la sélection des isotopes i à considérer dans l'unité de sélection d'isotope.

La gamma caméra comporte une unité de reconstruction 20, destinée à positionner éventuelles sources irradiantes détectées dans le champ d'observation Ω.

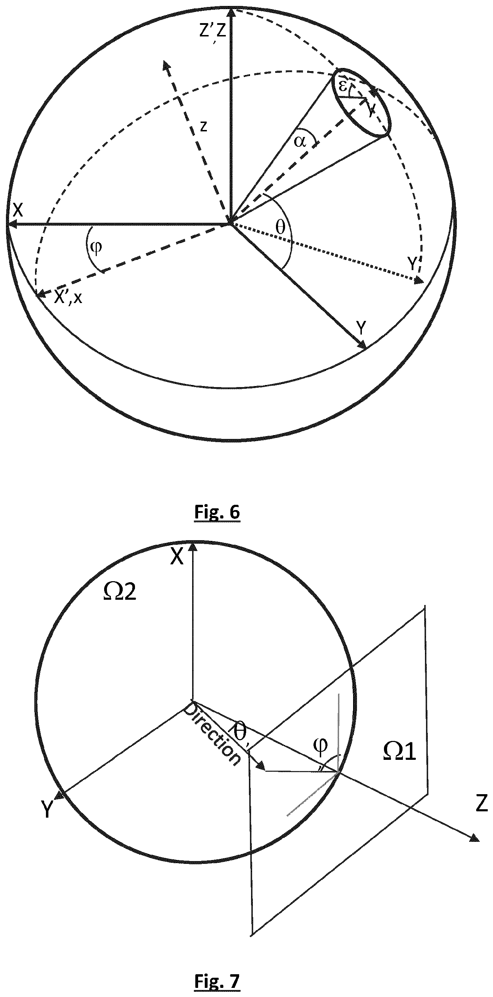

La reconstruction est effectuée selon une approche probabiliste. Une particularité de l'approche adoptée est d'attribuer un poids à chaque interaction détectée. Le poids correspond à une probabilité d'émission du photon détecté par un isotope sélectionné par l'unité de sélection d'isotopes 19, en différents points du champ d'observation. Lorsqu'on met en œuvre la première modalité, on ne considère que le premier champ d'observation Ω1, ce dernier étant discrétisé par des points de coordonnées X et Y. Le champ d'observation Ω1 est un plan parallèle au détecteur, situé à une distance d de ce dernier. La distance d peut être choisie de façon arbitraire. Lorsqu'on met en œuvre la deuxième modalité, on considère le champ d'observation Ω2. Comme précédemment indiqué, le deuxième champ d'observation Ω2 est par exemple à une sphère, centrée sur le centre du matériau détecteur, de rayon d, d étant la distance entre le premier champ d'observation Ω1 et le détecteur. La figure 7 représente les champ d'observation Ω1 et Ω2. La sélection entre la première modalité et la deuxième modalité est effectuée selon qu'une interaction est considérée comme simple ou multiple par l'unité de coïncidence temporelle.

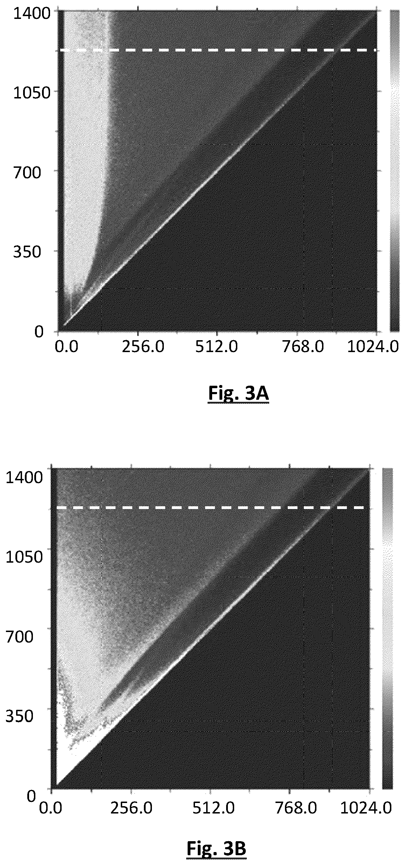

La figure 3A représente, pour différents d'énergie d'émission (axe des ordonnées - unité keV) des distributions de probabilité de détection d'une interaction simple, dans le matériau détecteur, selon différentes énergies (axe des abscisses - canaux) en supposant que le photon ayant généré l'interaction est un photon direct. Sur la figure 3A, l'axe des abscisses correspond à un canal d'énergie c, dont le rang est compris entre 1 et 1024, à chaque canal correspondant une bande d'énergie (ou « energy bin »). A chaque canal correspond une énergie E'. La notation E' désigne l'énergie associée à chaque canal, la notation E désignant l'énergie incidente au détecteur. L'axe des ordonnées correspond à des énergies d'émission. A chaque énergie d'émission correspond une distribution de probabilités de détection dans les différents canaux d'énergie. La figure 3A est une matrice *H_{s,j}* de différentes distributions de probabilités correspondant à différentes énergies d'émission. La distribution de probabilités correspondant à une énergie d'émission est une ligne de la matrice, telle que celle représentée en pointillés, correspondant à l'énergie 1300 keV. Le niveau de gris représente le niveau de probabilité associé. Ainsi, chaque point *H_{s,j}*(*E',E*) de la matrice *H_{s,j}* correspond à une probabilité de détection, dans un canal d'énergie c, d'un photon émis à une énergie d'émission E. La matrice *H_{s,j}* représentée sur la figure 3A correspond ainsi à une matrice de réponse spectrale de la gamma caméra. La matrice de réponse spectrale est obtenue en formant deux hypothèses :
- l'interaction détectée est une interaction simple, ce qui correspond à l'indice *j. j* est une variable prenant la valeur 1 lors d'une interaction simple et 2 lors d'une interaction multiple.
- le photon détecté est un photon direct, c'est-à-dire un photon atteignant le matériau détecteur en se propageant à travers une ouverture du collimateur 10, en ayant une énergie E correspondant à l'énergie d'émission par l'isotope. Cela correspond à l'indice *s* = +. *s* est une variable prenant la valeur + lorsqu'on considère un photon direct et - lorsqu'on considère un photon indirect. Un photon indirect est un photon ayant interagi avant d'atteindre le matériau détecteur ou ayant traversé le collimateur 10 sans interagir, et atteignant le matériau détecteur avec son énergie initiale.

Compte tenu de ces hypothèses, chaque point de la matrice *H_{s,j}* est tel que : ${H}_{s , j} \left(E′,E\right) = p \left(E′,E,s=+,j=1\right) ,$ où *p*(*E', E, s =* +, *j* = 1) est une probabilité de détection du photon dans le canal d'énergie c.

La figure 3B représente une matrice de réponse spectrale *H_{s,j}* établie en considérant une interaction simple (j = 1) et un photon indirect : *s* = -. Chaque point de la matrice de la figure 3B est tel que *H_{s,j}*(*E',E*) *= p*(*E'*|*E, s = -, j* = 1). Un photon indirect est un photon ayant perdu une partie de son énergie avant d'être détecté, et/ou ayant atteint le détecteur, sans perdre d'énergie en passant à travers une partie absorbante du collimateur 10. La perte d'énergie peut être due à une diffusion dans le collimateur 10 ou dans l'environnement de la gamma caméra. Les matrices représentées sur les figures 3A et 3B peut être obtenue par modélisation de type Monte Carlo.

Chaque matrice de réponse spectrale peut être obtenue par modélisation. Pour cela, les principaux composants du dispositif sont modélisés : châssis, collimateur, matériau détecteur. On simule la présence de sources irradiantes dans le champ d'observation de la caméra et on estime, pour chaque photon émis par une source, le statut du photon atteignant par le détecteur (photon direct ou indirect), ainsi que l'énergie du photon détectée dans le détecteur. Les sources irradiantes sont disposées aléatoirement dans le champ d'observation. Chaque matrice de réponse spectrale est obtenue par un moyennage des énergies détectées pour les photons respectivement directs ou indirects

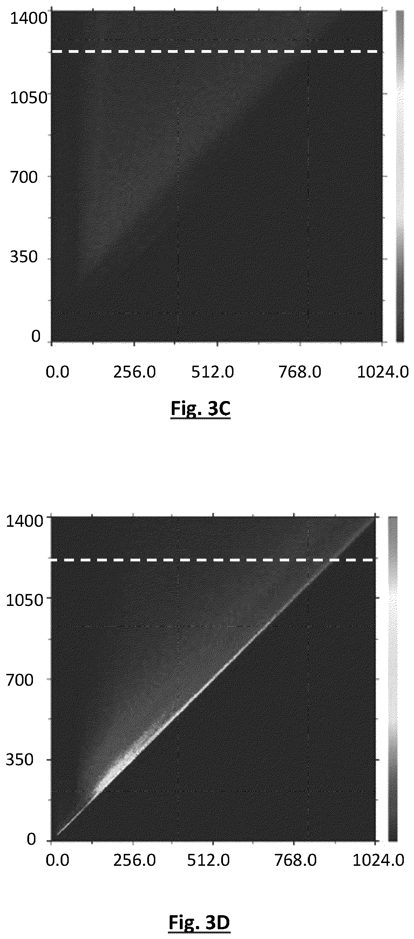

Les figures 3C et 3D représentent respectivement :
- une matrice de réponse spectrale *H_{s,j}*, telle que décrite en lien avec les figures 3A et 3B, en considérant *s* = + (photon direct) et *j* = 2 (interaction multiple) ;
- une matrice de réponse spectrale *H_{s,j}*, telle que décrite en lien avec les figures 3A et 3B, en considérant *s* = - (photon indirect) et *j* = 2 (interaction multiple). Dans le cas d'une interaction multiple, un photon indirect est tel que précédemment défini, auquel on ajoute un photon ne libérant pas toute son énergie dans le matériau de détection : suite à la diffusion, le photon diffusé s'échappe du matériau, sans être absorbé.

Il est rappelé que pour chaque interaction multiple, l'énergie *E'* correspond à la somme des énergies simultanément détectées.

Selon une possibilité, chaque matrice de réponse spectrale peut être établie pour chaque pixel. Dans l'exemple décrit, on considère une matrice de réponse spectrale définie pour l'ensemble des pixels, pour chaque type d'interaction : *j* = 1 ou 2 et *s* = + ou -.

La matrice de réponse spectrale peut être simulé par méthode de Monte Carlo.

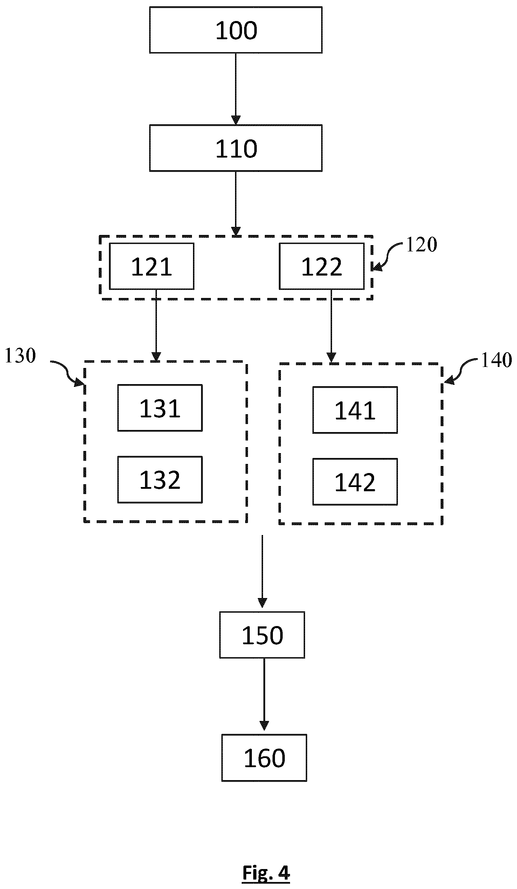

La figure 4 représente les principales étapes mises en œuvre, par les différents composants de la gamma caméra, pour obtenir une reconstruction de sources dans le champ d'observation Ω.

Etape 100 : détection d'interactions. La gamma caméra est disposée dans un environnement comportant potentiellement des sources irradiantes 5. Au cours d'une période d'acquisition :
- l'unité de localisation 14 assigne une position à chaque interaction détectée ;
- l'unité de coïncidence temporelle 16 détermine si chaque interaction est une interaction simple ou multiple ;
- l'unité de spectrométrie 15 assigne une énergie *E'* à chaque interaction détectée. Lors d'une interaction multiple, l'énergie *E'* correspond à la somme d'au moins deux énergies *E'*₁, *E'*₂ détectées simultanément ;

Chaque interaction peut être associée à un rang *k,* par exemple de façon chronologique. A chaque interaction *k* est assigné un ensemble de paramètres : *xₖ, yₖ, E'ₖ* pour une interaction simple et *x*_{1*,k*}, *y*_{1*,k*}, *z*_{1*,k*}, *x*_{2*,k*}, *y*_{2*,k*}, *z*_{2*,k*}, *E'*_{1*,k*}, *E'*_{2*,k*} pour une interaction multiple.

Les paramètres de chaque interaction sont mémorisés. Le nombre d'interactions mémorisées peut être supérieur à plusieurs centaines ou milliers, et peut dépasser plusieurs centaines de milliers ou millions.

Etape 110 : Sélection d'un isotope.

Au cours de cette étape, on sélectionne un ou plusieurs isotopes *i* en fonction des énergies *Eₖ* détectées au cours de la période d'acquisition. L'isotope, ou chaque isotope, peut être sélectionné automatiquement ou manuellement. De façon alternative, la sélection de chaque isotope est effectuée sur la base d'a priori quant à la composition isotopique des sources irradiantes.

Etape 120 : Prise en compte des modèles de réponse spatiaux et spectraux.

L'unité de reconstruction 20 effectue une reconstruction de la position des sources dans le champ observé à partir des interactions simples et des interactions multiples détectées. La reconstruction est effectuée en prenant successivement en compte chaque isotope *i* sélectionné. Ainsi, l'étape 120 est effectuée pour chaque isotope *i*.

La reconstruction des sources suppose la prise en compte d'un modèle de réponse spectral et d'un modèle de réponse spatial. Le modèle spectral *D*(*E', i, s*) permet de définir, pour chaque évènement cas, une probabilité d'énergie détectée *E'*, pour un type de photon (direct ou indirect), sachant l'isotope *i.*

Ainsi, ${D}_{j} \left(E′,i,s\right) = p \left(E′,s\left|i\right.\right)$ (2) ${D}_{j} \left(E′,i,s\right) = {\sum }_{E} {H}_{s , j} \left(E′,E\right) p \left(E\left|i\right.\right)$

*p*(*E*|*i*) correspond à une probabilité d'émission de l'énergie *E* par l'isotope *i.* Cette probabilité peut être déterminée par des bases de données existantes. , comportant, pour chaque isotope, les énergies d'émission et les taux d'embranchement correspondant.

Dans le cas d'une interaction multiple (*j* = 2), *E' = E'*₁ *+ E'*₂.

Le modèle spatial correspond à la probabilité de détecter une interaction d'un photon en une coordonnée (*x, y*) ou (*x, y, z*) lorsque le photon a été émis en une coordonnée (X,Y) du champ d'observation. Cela correspond à un modèle direct, pouvant aisément être obtenu par des modélisations. Pour les interactions simples et multiples, on prend en compte un modèle spatial préalablement établi, correspondant respectivement à la première modalité et à la deuxième modalité.

Ainsi, la reconstruction fait appel à un modèle de réponse spectral et à un modèle de réponse spatial différent selon que l'interaction est simple ou multiple.

### Sous-Etape 121 : interactions simples

Dans le cas d'interaction simples, le modèle de réponse spectral est établi à partir des matrices *H_{s,j}* avec *j*=1. Le modèle de réponse spatial est tel que :
- pour les photons directs, on utilise un modèle spatial prenant en compte la topographie du masque codé. Plus précisément, pour chaque position de source (*X*₁, *Y*₁) dans le premier champ d'observation Ω1, on peut estimer une probabilité d'interaction positionnée selon des coordonnées bidimensionnelles (*x, y*) dans le matériau détecteur. Ainsi, *p*(*x, y*|*X*₁, *Y*₁, *s =* +) *= M*(*x, y, X*₁, *Y*₁) (3), où *M*(*x, y, X*₁, *Y*₁) est une probabilité d'interaction selon les coordonnées (*x, y*) pour une source irradiante localisée en (*X*₁, *Y*₁) sur le premier champ d'observation Ω1. *M*(*x, y, X*₁, *Y*₁) peut être déterminée par modélisation numérique.
- pour les photons indirects, on utilise une probabilité de position uniforme dans le premier champ d'observation. $p \left(x,y\left|{X}_{1},{Y}_{1},s=-\right.\right) = I \left(x, y\right) ⊗ I \left({X}_{1}, {Y}_{1}\right)$, où 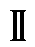 désigne une distribution bidimensionnelle uniforme.

A partir des modèles de réponse spectral *D* et spatial *M,* on peut établir une réponse du système *R*, telle que *R = D* ⊗ *M.* ⊗ est l'opérateur produit tensoriel.

Comme précédemment indiqué, la profondeur d'interaction z n'est pas nécessairement utilisée pour traiter les interactions simples.

### Sous-Etape 122 : interactions multiples

Dans le cas d'interactions multiples, le modèle de réponse spectral est établi à partir des matrices *H_{s,j}* avec j=2. Le modèle de réponse spatial est tel que :
- pour les photons directs, on utilise un modèle spatial tel qu'évoqué en lien avec les figures 2A et 2B. A chaque interaction multiple correspond deux cônes C dont le demi-angle au sommet correspond à l'angle de diffusion α. *p*(*x*₁*,y*₁,*z*₁*,x*₂*,y*₂*,*z₂,*E'*₁, *E'*₂|*E,X*₂*,Y*₂*,Z*₂*,s =* +) désigne une probabilité d'une diffusion Compton ait lieu entre les positions *x*₁*,y*₁,*z*₁ et *x*₂,*y*₂,*z*₂, libérant les énergies respectives *E*₁ et *E*₂, lorsqu'un photon direct est émis à l'énergie E dans une à partir d'un point de coordonnées (*X*₂, *Y₂*, *Z*₂)du champ d'observation Ω2. Le modèle spatial C peut être établi par modélisation numérique, comme décrit par la suite.
- pour les photons indirects, on utilise une probabilité de position uniforme dans le deuxième champ d'observation Ω2: $p \left({x}_{1},{y}_{1},{z}_{1},{x}_{2},{y}_{2},{z}_{2},E{′}_{1},E{′}_{2}\left|E,{X}_{2},{Y}_{2},{Z}_{2},s=-\right.\right) = I \left({x}_{1}, {y}_{1}, {z}_{1}\right) ⊗ I \left({x}_{2}, {y}_{2}, {z}_{2}\right) ⊗ S \left({X}_{2}, {Y}_{2}, {Z}_{2}\right)$ où ⊗ désigne le produit tensoriel. *S*(*X*₂, *Y*₂, *Z*₂) correspond à la sphère formant le champ d'observation Ω2. Il peut par exemple s'agir d'une sphère de rayon unité.

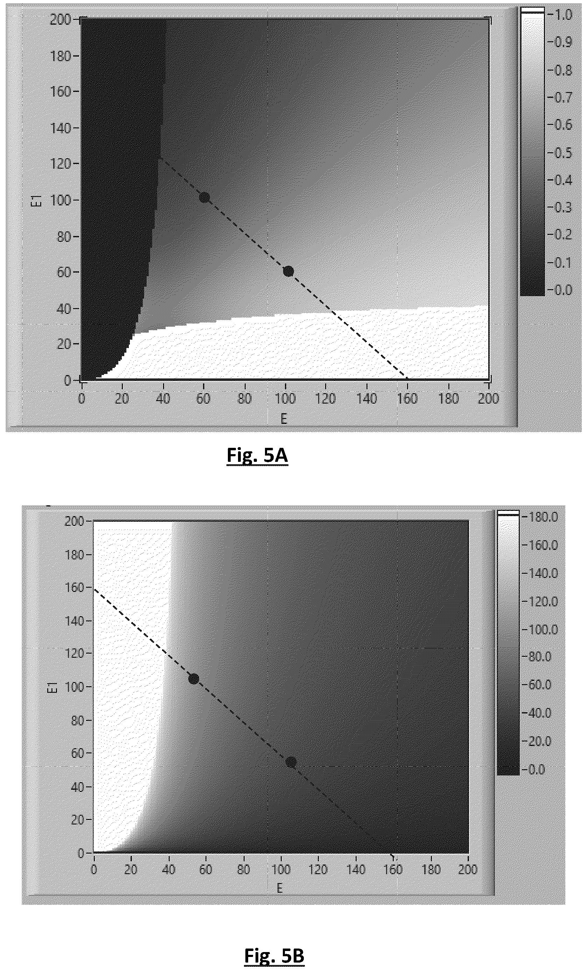

Les figures 5A et 5B illustrent la mise en œuvre du modèle spatial C utilisé pour les interactions multiples. La figure 5A montre la valeur de l'angle de diffusion α (niveau de gris) en fonction des énergies détectées de la première interaction (axe des ordonnées) et de la deuxième interaction (axe des abscisses). Sur les axes des abscisses et des ordonnées, la coordonnée 100 correspond à l'énergie 511 keV. Sur la figure 5A, on a représenté un exemple de deux détections d'interactions d'énergies respectives 500 keV et 250 keV. La valeur de l'angle de diffusion α, indiquée par le niveau de gris, dépend de l'interaction qui correspond à la diffusion (première interaction détectée dans l'ordre chronologique) et de l'interaction qui correspond à l'absorption (deuxième interaction détectée dans l'ordre chronologique). Si l'interaction qui correspond à la diffusion est celle d'énergie 500 keV, la valeur de l'angle de diffusion α est de 48°. Si l'interaction qui correspond à la diffusion est celle d'énergie 250 keV, la valeur de l'angle de diffusion est de 97° (diffusion vers l'arrière). La ligne en pointillés correspond à la somme des énergies de la première interaction et de la deuxième interaction, en l'occurrence 750 keV. La ligne en pointillés permet d'identifier des couples *E'*₁, *E'*₂ dont l'énergie totale détectée est égale à 750 keV.

Ainsi, la figure 5A permet d'estimer l'angle α à partir de *E'*₁ et *E'*₂. Selon l'ordre chronologique assigné aux interactions générant les énergies *E'*₁ et *E'*₂, le modèle spatial correspond à deux cônes, s'étendant autour d'un même axe qui correspond à une droite reliant les coordonnées (*x*₁,*y*₁,*z*₁) et (*x*₂,*y*₂,*z*₂) de chaque interaction, dont les sommets respectifs sont (*x*₁,*y*₁,*z*₁) et (*x*₂,*y*₂,*z*₂), et dont les demi-angles au sommet respectifs dont les deux angles de diffusion obtenus en prenant en compte les deux chronologies de détection : interaction localisée en (*x*₁,*y*₁,*z*₁) survenant respectivement avant ou après l'interaction localisée en (*x*₂,*y*₂,*z*₂).

A chaque cône est assigné une probabilité qui dépend de l'ordre chronologique de chaque détection.

La figure 5B représente les probabilités associées à chaque ordre chronologique : 500 keV (diffusion) puis 250 keV (absorption) ou 250 keV (diffusion) puis 500 keV (absorption). Les axes de la figure 5B sont similaires aux axes de la figure 5A. Le niveau de gris correspond à la probabilité de chaque ordre chronologique : la probabilité associée à la configuration (500 keV ; 250 keV) est de 0,3 ; tandis que la probabilité associée à la configuration (250 keV, 500 keV) est de quelques %. Les probabilités correspondant à chaque configuration sont déterminées en utilisant la formule de Klein-Nishima.

Les figures 5A et 5B comportent des zones blanches qui correspondent à des situations impossibles.

En utilisant les données tabulées de la figure 5A et les probabilités de la figure 5B, et connaissant les positions de chaque interaction de diffusion, on peut déterminer deux cônes coaxiaux, et de demi-angles correspondant déterminés à l'aide de la figure 5A, chaque cône étant affecté d'une probabilité déterminée lors de la figure 5B. L'axe de chaque cône est une droite passant par les positions (*x*₁, *y*₁,*z*₁) et (*x*₂,*y*₂,*z*₂) de chaque interaction. L'incertitude sur l'angle de diffusion, due aux incertitudes sur les énergies respectives *E*₁ et *E*₂ et sur les positions d'interactions, peut se traduire par une épaisseur définie pour chaque cône. Afin de prendre en compte les incertitudes, le demi-angle de chaque cône peut varier dans un intervalle de confiance α±Δα où Δα correspond à une incertitude de mesure. L'incertitude de mesure résulte de l'incertitude sur les estimations des énergies *E*₁ et *E*₂. Chaque cône est paramétré par les angles *α* (angle de diffusion) ainsi que *θ* (élévation de l'axe du cône) et *φ* (azimuth de l'axe du cône) tels que représentés sur la figure 6. La figure 6 schématise le deuxième champ d'observation Ω2, assimilé ici à une surface sphérique. Un repère fixe (X, Y et Z) est associé au deuxième champ, dont l'origine correspond au centre du détecteur. Les axes X et Y sont par exemple parallèles à la surface de détection. L'axe Z est perpendiculaire à la surface de détection. Sur la figure 6, on a représenté un cône de demi-angle α. Lorsque le cône passe par le collimateur 10, l'atténuation de ce dernier est prise en compte dans le modèle. On peut ainsi établir une probabilité de provenance du photon pour chaque cordonnée angulaire θ et φ. La position de chaque source correspond à une intersection entre chaque cône et la surface sphérique.

Sur la figure 6, on a également représenté :
- un repère (*x,y,z*), lié aux interactions, dont l'axe *y* correspond à l'axe du cône, c'est-à-dire à l'axe droite passant par les positions (*x*₁, *y*₁,*z*₁) et (*x*₂, *y*₂, *z*₂) ;
- un repère intermédiaire (X',Y',Z'), qui est obtenu par rotation du repère (*x, y,* z) autour de l'axe x, confondu avec l'axe X', selon l'angle θ ;
- le repère (X,Y,Z) lié au détecteur, qui est obtenu par rotation du repère intermédiaire (X',Y',Z'), autour de l'axe Z', confondu avec l'axe Z, selon l'angle φ.

Les coordonnées d'un point du cône sont :
- dans le repère lié aux interactions (x,y,z) $\left\{\begin{matrix}x = sin \left(α\right) sin \left(ε\right) \\ y = cos \left(α\right) \\ z = sin \left(α\right) cos \left(ε\right)\end{matrix}\right.$

L'angle *ε* correspond à un angle de précession autour de l'axe du cône, uniformément réparti entre 0 et 2π.
- dans le repère intermédiaire (X',Y',Z') : $\left\{\begin{matrix}X ′ = x \\ Y ′ = ycos \left(θ\right) - zsin \left(θ\right) \\ Z ′ = ysin \left(θ\right) + zcos \left(θ\right)\end{matrix}\right.$
- dans le repère du champ d'observation Ω2, centré sur le détecteur: $\left\{\begin{matrix}{X}_{2} = X ′ cos \left(φ\right) - Y ′ sin \left(θ\right) \\ {Y}_{2} = X ′ sin \left(φ\right) + Y ′ cos \left(θ\right) \\ {Z}_{2} = Z ′\end{matrix}\right.$

La figure 7 représente le premier champ d'observation Ω1, ou champ d'observation réduit, ainsi que le deuxième champ d'observation Ω2. Certaines coordonnées *X, Y, Z* définies dans le champ d'observation Ω2 peuvent être transposées dans le premier champ d'observation Ω1.

Pour cela, on définit des coordonnées angulaires θ' et φ' pour chaque coordonnée *X, Y, Z* dans le champ d'observation. Lorsque les coordonnées angulaires θ' et φ' intersectent le premier champ d'observation Ω1, on détermine les coordonnées correspondantes dans le premier champ d'observation Ω1. Ainsi, pour chaque coordonnée angulaire θ' et φ' comprise dans le champ d'observation réduit, on peut appliquer des relations trigonométriques pour obtenir une position *X*₁, *Y*₁ dans le champ d'observation réduit. ${X}_{1} = tan \left(θ′\right) cos \left(φ′\right)$ ${Y}_{1} = tan \left(θ′\right) sin \left(φ′\right)$

Cela permet d'attribuer une position d'émission, dans le premier champ d'observation Ω1, d'un photon ayant généré une interaction multiple.

Etape 130 : reconstruction des interactions simples. La reconstruction des sources est effectuée en mettant en œuvre une approche de reconstruction de type MLEM (Maximum Likelihood Expectation Maximisation - Algorithme maximum de vraisemblance espérance maximisation), qui résulte de l'application du théorème de Bayes, en séparant les interactions simples des interactions multiples. Selon le théorème de Bayes, $p \left({X}_{1},{Y}_{1},i\left|E′,x,y\right.\right) = \frac{p \left(E′,x,y\left|{X}_{1}, {Y}_{1}, i\right.\right)}{p \left(E′,x,y\right)} \times p \left({X}_{1}, {Y}_{1}, i\right)$ (4) où :
- *p*(*X*₁, *Y*₁, *i*) est l'hypothèse courante sur la position et la composition (isotopes) des sources : cela résulte de la connaissance a priori de la reconstruction dont on dispose relativement à la position des sources : *p*(*X*₁, *Y*₁, *i*) correspond à l'image courante. Par la suite, *p*(*X*₁, *Y*₁, *i*) est désignée *O*(*X*₁, *Y*₁, *i*).
- *p*(*E', x, y*|*X*₁, *Y*₁, *i*) est un modèle direct, résultant du modèle de réponse global R précédemment décrit, qui combine la réponse spectrale et la réponse spatiale.
- *p*(*E', x, y*) est obtenu par marginalisation : $p \left(E′,x,y\right) = {\sum }_{{X}_{1} , {Y}_{1} , i , s} \left(p\left(E′,x,y\left|{X}_{1}, {Y}_{1}, i\right.\right)\times p\left({X}_{1}, {Y}_{1}, i\right)\right)$ (5)
*p*(*E', x, y*) correspond à ce qui est attendu sur le détecteur compte tenu de l'image courante *O*(*X*₁, *Y*₁*, i*).

Le processus de reconstruction est effectué de façon itérative, séparément pour chaque isotope, selon les sous-étapes suivantes :
Sous-étape 131 : sélection d'un isotope parmi les isotopes indiqués lors de l'étape 110.
Sous-étape 132 : reconstruction d'une image *O*^{(*n*)}(*X*₁, *Y*₁, *i*), qui correspond à une distribution spatiale de intensité d'émission de l'isotope i dans le premier champ d'observation, à l'aide des interactions simples avec : ${O}^{\left(n\right)} \left({X}_{1}, {Y}_{1}, i\right) = {\sum }_{k} p \left({X}_{1},{Y}_{1},i\left|E{′}_{k},{x}_{k},{y}_{k}\right.\right)$ (6) où k désigne chaque interaction. Selon ce mode de réalisation, dit en mode liste, les interactions, simples ou multiples, sont traitées les unes après les autres.

En utilisant (4) et (5), on obtient : ${O}^{\left(n\right)} \left({X}_{1}, {Y}_{1}, i\right) = p \left({X}_{1}, {Y}_{1}, i\right) {\sum }_{k} \frac{p \left(E{′}_{k},{x}_{k},{y}_{k}\left|{X}_{1}, {Y}_{1}, i\right.\right)}{p \left(E{′}_{k}{x}_{k},{y}_{k}\right)}$ (7) avec $p \left(E{′}_{k},{x}_{k},{y}_{k}\left|{X}_{1}, {Y}_{1}, i\right.\right) = {\sum }_{s} p \left(E{′}_{k}\left|s, i\right.\right) p \left({x}_{k},{y}_{k}\left|{X}_{1}, {Y}_{1}, s\right.\right)$ $\begin{matrix}p \left(E{′}_{k},{x}_{k},{y}_{k}\left|{X}_{1}, {Y}_{1}, i\right.\right) \\ = p \left(E{′}_{k}\left|s+,i\right.\right) p \left({x}_{k},{y}_{k}\left|{X}_{1},{Y}_{1},s+\right.\right) + p \left(E{′}_{k}\left|s-,i\right.\right) p \left({x}_{k},{y}_{k}\left|{X}_{1},{Y}_{1},s-\right.\right)\end{matrix}$ ave *p*(*xₖ*, *yₖ*|*X*₁, *Y*₁, *s*+ ) = *M*(*xₖ*, *yₖ*, *X*₁, *Y*₁) et $p \left({x}_{k},{y}_{k}\left|{X}_{1},{Y}_{1},s-\right.\right) = I \left({x}_{k}, {y}_{k}, {X}_{1}, {Y}_{1}\right)$ *M*(*xₖ, yₖ, X*₁, *Y*₁) correspond à la fonction de réponse du masque. Elle est obtenue par des algorithmes classiques de reconstruction de sources pour les gamma caméras à masques codés.

La sous-étape 132 est mise en œuvre de façon itérative, avec : ${O}^{\left(n+1\right)} \left({X}_{1}, {Y}_{1}, i\right) = {O}^{\left(n\right)} \left({X}_{1}, {Y}_{1}, i\right) {\sum }_{k} \left[\frac{p \left(E{′}_{k},{x}_{k},{y}_{k}\left|{X}_{1}, {Y}_{1}, i\right.\right)}{{\sum }_{{X}_{1} , {Y}_{1} , i} p \left(E{′}_{k},{x}_{k},{y}_{k}\left|{X}_{1}, {Y}_{1}, i\right.\right) {O}^{\left(n\right)} \left({X}_{1}, {Y}_{1}, i\right)}\right]$ (8)

Chaque itération, de rang *n,* vise à estimer *O*^{(*n*+1)} (*X*₁, *Y*₁, *i*) à partir d'une estimation précédente *O*^{(*n*)} (*X*₁, *Y*₁, *i*). Lorsque *n* = 0, l'estimation est effectuée à partir d'une estimation initiale *O*^{(*n*=0)} (*X*₁, *Y*₁, *i*), par exemple une valeur uniforme en chaque point et pour tout isotope *i* dans le champ d'observation.

Dans les expressions (7) et (8), la reconstruction est effectué selon un mode dit de mode liste, dans lequel on prend en compte les interactions de rang k mémorisées individuellement. Si *I*^{(*n*)}(*x, y, i*) correspond à estimation de l'image, formée sur le détecteur, à l'itération (*n*) par les interactions simples, des photons émises par un isotope i, on peut écrire : ${I}^{\left(n\right)} \left(x, y, i, s\right) = {\sum }_{X , Y} \left[p\left(x,y\left|{X}_{1}, {Y}_{1}, s\right.\right){O}^{\left(n\right)}\left({X}_{1}, {Y}_{1}, i\right)\right]$ (9)

Lorsque *s* = +, on considère que le photon détecté est directement émis par l'isotope i. L'image *I*^{(*n*)}(*x, y, i, s*) correspond à une estimation de l'image formée sur la caméra par l'isotope i. Lorsque *s* = -, le photon détecté est indirectement émis par l'isotope i. L'image *I*^{(*n*)}(*x, y, i, s*) est alors uniforme.

L'expression (8) devient : ${O}^{\left(n+1\right)} \left({X}_{1}, {Y}_{1}, i\right) = {O}^{\left(n\right)} \left({X}_{1}, {Y}_{1}, i\right) {\sum }_{k , s} \left[\frac{p \left({E}_{k}\left|i, s\right.\right) p \left({x}_{k},{y}_{k}\left|{X}_{1}, {Y}_{1}, s\right.\right)}{{\sum }_{i , s} p \left({E}_{k},s\left|i\right.\right) {I}^{\left(n\right)} \left({x}_{k}, {y}_{k}, i, s\right)}\right]$ (10)

Lors de la première itération, on prend en compte une reconstruction a priori initialisée, notée *O*^{(*n*=0)}(*X, Y, i*), qui est par exemple une distribution uniforme pour chaque isotope.

Dans l'expression (10), *p*(*xₖ, yₖ* |*X*₁, *Y*₁, *s* ) correspond à la prise en compte de la réponse spatiale de la caméra, c'est-à-dire la probabilité qu'un photon émis en (*X*₁, *Y*₁) selon le scénario *s* (photon direct ou indirect) soit détecté en (*x, y*) lors de l'interaction *k.*

L'expression (10) peut s'écrire : ${O}^{\left(n+1\right)} \left({X}_{1}, {Y}_{1}, i\right) = {O}^{\left(n\right)} \left({X}_{1}, {Y}_{1}, i\right) {\sum }_{k} {U}_{k} \left({X}_{1}, {Y}_{1}, i\right)$ (11) avec ${U}_{k} \left({X}_{1}, {Y}_{1}, i\right) = {\sum }_{s} \left[\frac{p \left({E}_{k}\left|i, s\right.\right) p \left({x}_{k},{y}_{k}\left|{X}_{1}, {Y}_{1}, s\right.\right)}{{\sum }_{i , s} p \left({E}_{k},s\left|i\right.\right) {I}^{\left(n\right)} \left({x}_{k}, {y}_{k}, i, s\right)}\right]$ (12)

*Uₖ*(*X*₁, *Y*₁, *i*) correspond à une contribution d'une détection d'une interaction simple *k* dans la mise à jour de l'image *O*^{(*n*+1)}(*X*₁, *Y*₁, *i*).

Etape 140 : Cas des interactions multiples.

L'algorithme suivi pour les interactions multiples est analogue à celui établi pour les interaction simples. Il permet de former une image dans le champ d'observation Ω2 précédemment défini.

Sous-Etape 141 : De façon analogue à l'étape 131, un isotope est sélectionné.

Sous Etape 142 : Le processus de reconstruction d'image est effectué de façon analogue aux interactions simples $\begin{matrix}p \left({X}_{2},{Y}_{2},{Z}_{2},i\left|{x}_{1 , k},{y}_{1 , k},{z}_{1 , k},{x}_{2 , k},{y}_{2 , k},{z}_{2 , k},E{′}_{1 , k},E{′}_{2 , k}\right.\right) \\ = \frac{p \left({x}_{1 , k},{y}_{1 , k},{z}_{1 , k},{x}_{2 , k},{y}_{2 , k},{z}_{2 , k},E{′}_{1 , k},E{′}_{2 , k}\left|{X}_{2}, {Y}_{2}, {Z}_{2}, i\right.\right)}{p \left({x}_{1 , k},{y}_{1 , k},{z}_{1 , k},{x}_{2 , k},{y}_{2 , k},{z}_{2 , k},E{′}_{1 , k},E{′}_{2 , k}\right)} p \left({X}_{2}, {Y}_{2}, {Z}_{2}, i\right)\end{matrix}$ (4')

*X*₂, *Y*₂, *Z*₂ appartiennent au champ d'observation Ω2.

Le processus vise à reconstruire d'une image *O'*^{(*n*)}(*X*₂, *Y*₂, *Z*₂, *i*), dans le champ Ω2, qui correspond à une distribution spatiale de intensité d'émission de l'isotope *i* dans le deuxième champ d'observation, ce dernier recouvrant le premier champ d'observation et s'étendant au-delà de ce dernier. $\begin{matrix}{O}^{′ \left(n\right)} \left({X}_{2}, {Y}_{2}, {Z}_{2}, i\right) = {\sum }_{k} p \left({X}_{2},{Y}_{2},{Z}_{2},i\left|{x}_{1 , k},{y}_{1 , k},{z}_{1 , k},{x}_{2 , k},{y}_{2 , k},{z}_{2 , k},E{′}_{1 , k},E{′}_{2 , k}\right.\right) \\ {O}^{′ \left(n\right)} \left({X}_{2}, {Y}_{2}, {Z}_{2}, i\right) \\ = p \left({X}_{2}, {Y}_{2}, {Z}_{2}, i\right) {\sum }_{k} \frac{p \left({x}_{1 k},{y}_{1 k},{z}_{1 k},{x}_{2 k},{y}_{2 k},{z}_{2 k},E{′}_{1 k},E{′}_{2 k}\left|{X}_{2}, {Y}_{2}, {Z}_{2}, i\right.\right)}{p \left({x}_{1 k},{y}_{1 k},{z}_{1 k},{x}_{2 k},{y}_{2 k},{z}_{2 k},E{′}_{1 k},E{′}_{2 k}\right)} \end{matrix}$ (7') et $\begin{matrix}p \left({x}_{1 k},{y}_{1 k},{z}_{1 k},{x}_{2 k},{y}_{2 k},{z}_{2 k},E{′}_{1 k},E{′}_{2 k}\right) = {\sum }_{s} p \left(\begin{matrix}E {′}_{1 k} + \\ E {′}_{2 k} \left|s, i\right.\end{matrix}\right) p \left({x}_{1 k},{y}_{1 k},{z}_{1 k},{x}_{2 k},{y}_{2 k},{z}_{2 k},E{′}_{1 k},E{′}_{2 k}\left|{X}_{2}, {Y}_{2}, {Z}_{2}, s\right.\right) = \\ = p \left(E{′}_{1 k}+E{′}_{2 k}\left|s+,i\right.\right) p \left({x}_{1 , k},{y}_{1 , k},{z}_{1 , k},{x}_{2 , k},{y}_{2 , k},{z}_{2 , k},E{′}_{1 , k},E{′}_{2 , k},\left|{X}_{2}, {Y}_{2}, {Z}_{2}, s\right.\right) + p \left(\begin{matrix}E {′}_{1 k} \\ + E {′}_{2 k} \left|s-,i\right.\end{matrix}\right) p \left({x}_{1 , k},{y}_{1 , k},{z}_{1 , k},{x}_{2 , k},{y}_{2 , k}{z}_{2 , k},E{′}_{1 , k},E{′}_{2 , k}\left|{X}_{2},{Y}_{2},{Z}_{2},s-\right.\right)\end{matrix}$ avec $p \left({x}_{1 , k},{y}_{1 , k},{z}_{1 , k},{x}_{2 , k},{y}_{2 , k},{z}_{2 , k},E{′}_{1 , k},E{′}_{2 , k}\left|{X}_{2},{Y}_{2},{Z}_{2},s+\right.\right) = C \left({α}_{k}, {θ}_{k}, {φ}_{k}, {X}_{2}, {Y}_{2}, {Z}_{2}\right)$ et $p \left({x}_{1 , k},{y}_{1 , k},{z}_{1 , k},{x}_{2 , k},{y}_{2 , k},{z}_{2 , k},E{′}_{1 , k},E{′}_{2 , k}\left|{X}_{2},{Y}_{2},{Z}_{2},s-\right.\right) = I \left({x}_{1}, {y}_{1}, {z}_{1}, {x}_{2}, {y}_{2}, {z}_{2}, {X}_{2}, {Y}_{2}, {Z}_{2}\right)$

*C*(*αₖ, θₖ, φₖ, X*₂, *Y*₂, *Z*₂) correspond à chaque cône représentant la propagation du rayonnement incident, à partir de coordonnées *X*₂, *Y*₂, *Z*₂ du champ d'observation, au cours d'une interaction multiple k. On rappelle que chaque interaction multiple génère deux cônes différents, pondérés par des probabilités comme décrit en lien avec l'étape 122.

L'image objet est reconstruite de façon itérative, avec : $\begin{matrix}O {′}^{\left(n+1\right)} \left({X}_{2}, {Y}_{2}, {Z}_{2}, i\right) = \\ O {′}^{\left(n\right)} \left({X}_{2}, {Y}_{2}, {Z}_{2}, i\right) {\sum }_{k} \left[\frac{p \left({x}_{1 , k},{y}_{1 , k},{z}_{1 , k},{x}_{2 , k},{y}_{2 , k},{z}_{2 , k},E{′}_{1 , k},E{′}_{2 , k}\left|{X}_{2}, {Y}_{2}, {Z}_{2}, i\right.\right)}{{\sum }_{{X}_{2} , {Y}_{2} , {Z}_{2} , i} p \left({x}_{1 , k},{y}_{1 , k},{z}_{1 , k},{x}_{2 , k},{y}_{2 , k},{z}_{2 , k},E{′}_{1 , k},E{′}_{2 , k}\left|{X}_{2}, {Y}_{2}, {Z}_{2}, i\right.\right) {O}^{\left(n\right)} \left({X}_{2}, {Y}_{2}, {Z}_{2}, i\right)}\right]\end{matrix}$ (8')

Chaque itération, de rang *n,* vise à estimer *O'*^{(*n*+1)}(*X*₂, *Y*₂, *Z*₂, *i*) à partir d'une estimation précédente *O'*^{(*n*)}(*X*₂, *Y*₂, *Z*₂, *i*). Lorsque *n* = 0, l'estimation est effectuée à partir d'une estimation initiale *O'*^{(*n*=0)}(*X*₂, *Y*₂, *Z*₂, *i*), par exemple une valeur uniforme ou nulle en chaque point et pour tout isotope i dans le champ d'observation.

Lors de la première itération, on prend en compte une reconstruction a priori initialisée, notée *O'*^{(*n*=0)}(*X*₂, *Y*₂, *Z*₂, *i*), qui est par exemple une distribution uniforme pour chaque isotope.

L'expression (13) peut s'écrire : $O {′}^{\left(n+1\right)} \left({X}_{2}, {Y}_{2}, {Z}_{2}, i\right) = O {′}^{\left(n\right)} \left({X}_{2}, {Y}_{2}, {Z}_{2}, i\right) {\sum }_{k} U {′}_{k} \left({X}_{2}, {Y}_{2}, {Z}_{2}, i\right)$ (11') avec $\begin{matrix}U {′}_{k} \left({X}_{2}, {Y}_{2}, {Z}_{2}, i\right) = \\ {\sum }_{k} \left[\frac{p \left({x}_{1 , k},{y}_{1 , k},{z}_{1 , k},{x}_{2 , k},{y}_{2 , k},{z}_{2 , k},E{′}_{1 , k},E{′}_{2 , k}\left|{X}_{2}, {Y}_{2}, {Z}_{2}, i\right.\right)}{{\sum }_{{X}_{2} , {Y}_{2} , {Z}_{2} , i} p \left({x}_{1 , k},{y}_{1 , k},{z}_{1 , k},{x}_{2 , k},{y}_{2 , k},{z}_{2 , k},E{′}_{1 , k}E{′}_{2 , k}\left|{X}_{2}, {Y}_{2}, {Z}_{2}\right.,i\right) {O}^{\left(n\right)} p \left({X}_{2}, {Y}_{2}, {Z}_{2}, i\right)}\right]\end{matrix}$ (12')

*U'ₖ*(*X*₂, *Y*₂, *Z*₂, *i*)orrespond à une contribution d'une détection d'une interaction multiple *k* dans la mise à jour de l'image *O'*^{(*n*+1)}(*X*₂, *Y*₂, *Z*₂, *i*).

### Etape 150 : reconstruction combinée

L'étape 140 peut être mise en œuvre dans la partie du champ d'observation Ω à l'extérieur du champ d'observation Ω1. L'étape 130 peut être mise en œuvre en ne considérant que les interactions simples, dans le champ d'observation Ω1. L'invention tire profit qu'une partie du champ d'observation Ω est adressée par les deux modalités d'imagerie, dans la zone de recouvrement entre Ω1 et Ω2. Dans cet exemple, on considère qu'il s'agit du premier champ d'observation Ω1 sur lequel on peut effectuer une projection d'une partie du deuxième champ d'observation Ω2. Ainsi, certains points d'émission de coordonnées *X*₂, *Y*₂, *Z*₂ peuvent être projetés dans le champ d'observation Ω1, leurs coordonnées, dans Ω2, étant reliées par les équations : ${X}_{1} = tan \left(θ′\right) cos \left(φ′\right)$ (13a) ${Y}_{1} = tan \left(θ′\right) sin \left(φ′\right)$ (13b) et $φ ′ = atan \left(\frac{{Y}_{1}}{{X}_{1}}\right) = atan \left(\frac{{Y}_{2}}{{X}_{2}}\right)$ (13c) $θ ′ = atan \left(\sqrt{{{X}_{1}}^{2} + {{Y}_{1}}^{2}}\right) = asin \left(\sqrt{{{X}_{2}}^{2} + {{Y}_{2}}^{2}}\right)$ (13d)

De façon alternative, il est possible de projeter le premier champ d'observation dans le deuxième champ d'observation avec : ${X}_{2} = sinθ ′ cosφ ′$ (13e) ${Y}_{2} = sinθ ′ sinφ ′$ (13f) ${Z}_{2} = cosφ ′$ (13g)

Ainsi, dans le premier champ d'observation Ω1 : ${O}^{\left(n+1\right)} \left({X}_{1}, {Y}_{1}, i\right) = {O}^{\left(n\right)} \left({X}_{1}, {Y}_{1}, i\right) {\sum }_{k} \left[{U}_{k}\left({X}_{1}, {Y}_{1}, i\right)+U{′}_{k}\left({X}_{2 \to 1}, {Y}_{2 \to 1}, i\right)\right]$ (14) où *X*_{2→1}, *Y*_{2→1} correspondent aux coordonnées, initialement déterminées dans le deuxième champ d'observation Ω2, et pouvant être projetées dans Ω1 en appliquant les expressions permettant le changement de repère indiquées dans (13a) à (13g).

En dehors de la zone de recouvrement, la reconstruction peut être effectuée selon (11'), sur la base des interactions multiples uniquement. Cela permet d'obtenir un reconstruction dans la partie du champ d'observation Ω2 n'ayant pas de recouvrement avec Ω1.

La reconstruction peut également être obtenue par projection du premier champ d'observation sur le deuxième champ d'observation : Dans ce cas, on effectue un changement de variables selon les expressions (13d) à (13g). Cela permet d'obtenir une reconstruction dans le premier champ d'observation projeté sur une partie du deuxième champ d'observation, dans la zone dans laquelle les deux champs d'observation se recouvrent.

Pour chaque isotope considéré, les itérations cessent lorsqu'un critère de convergence est atteint. Il peut par exemple s'agir de l'écart quadratique entre deux images reconstruites successives.

Lorsque l'ensemble des isotopes ont fait l'objet d'une reconstruction, le procédé de reconstruction est stoppé : étape 160.

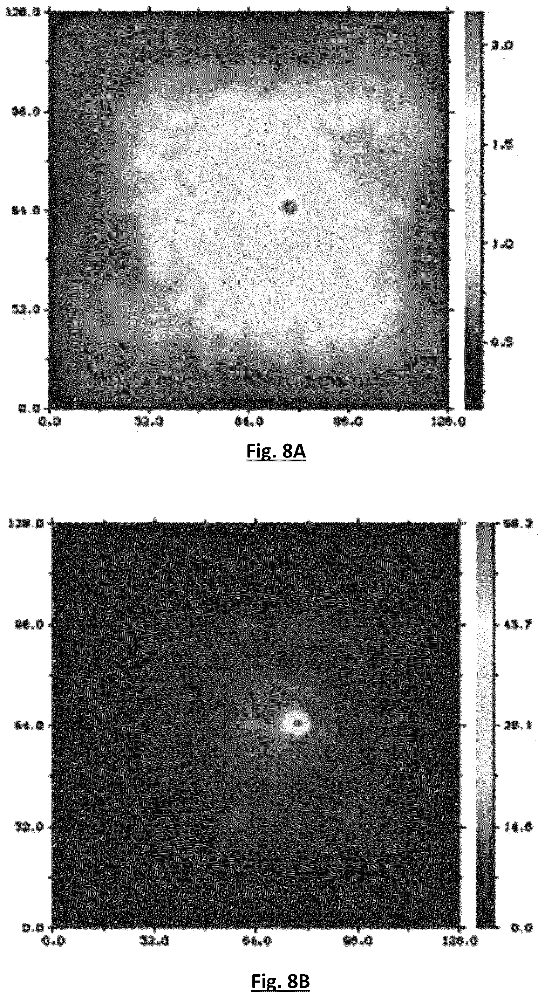

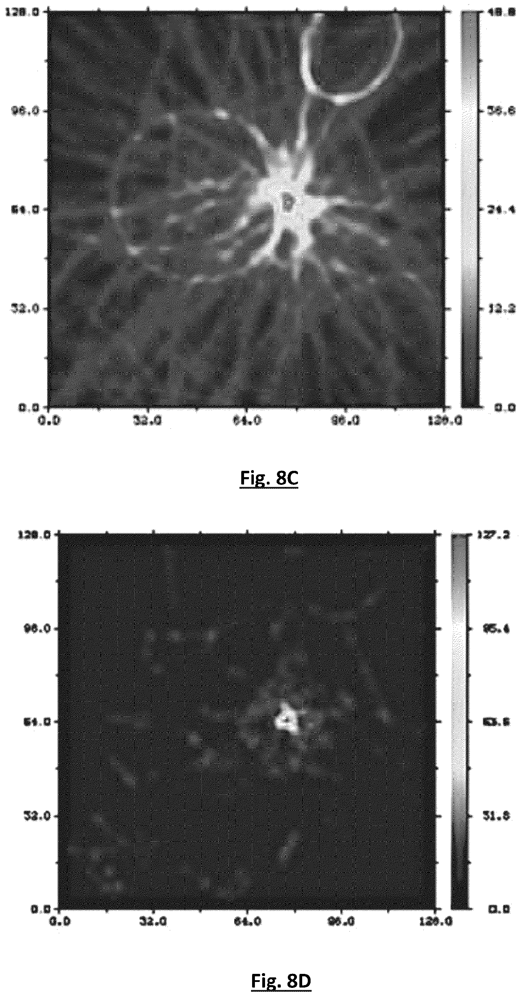

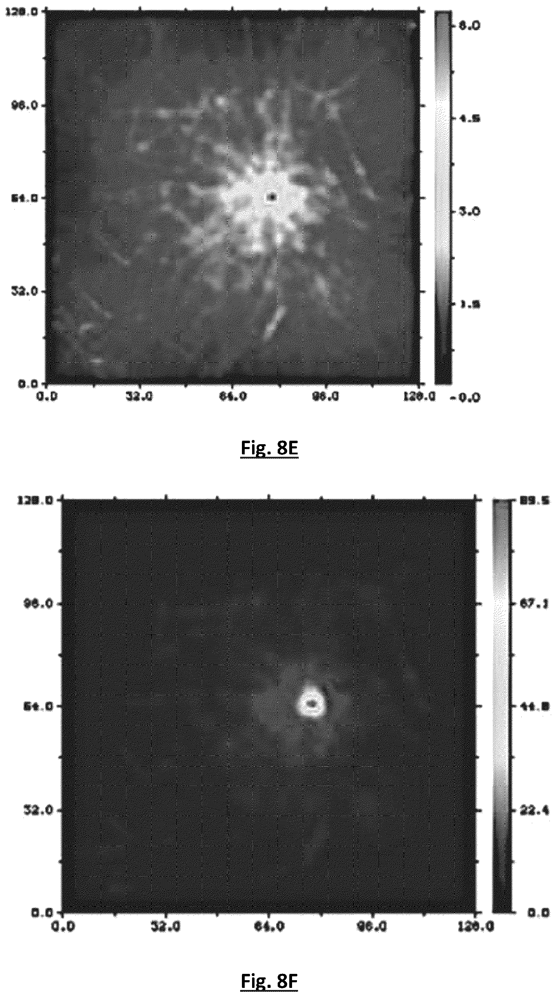

Les inventeurs ont mis en œuvre l'invention en exposant la gamma caméra à une source de type ¹³⁷Cs d'activité 5MBq disposée à 1m d'une gamma caméra telle que précédemment décrite. La source était placée dans le champ d'observation réduit Ω1 : elle était donc visible à la fois par la première modalité (masque codé) que par la deuxième modalité (imagerie Compton). Les figures 8A, 8C et 8E montrent une image de la source obtenue sur la base d'une seule itération de l'algorithme de reconstruction, respectivement
- en ne prenant en compte uniquement les interactions simples : l'image de la source est obtenue selon la première modalité, sur la base de 584 interactions détectées (figure 8A) ;
- en prenant en compte uniquement les interactions multiples : l'image de la source est obtenue selon la deuxième modalité, sur la base de 104 interactions multiples détectées (figure 8C) ;
- en prenant en compte à la fois les interactions simples et multiples. l'image de la source est obtenue en combinant les première et deuxième modalités (figure 8E).

La figure 8E conduit à une détection plus précise de la source, comparativement à la figure 8C et à la figure 8A.

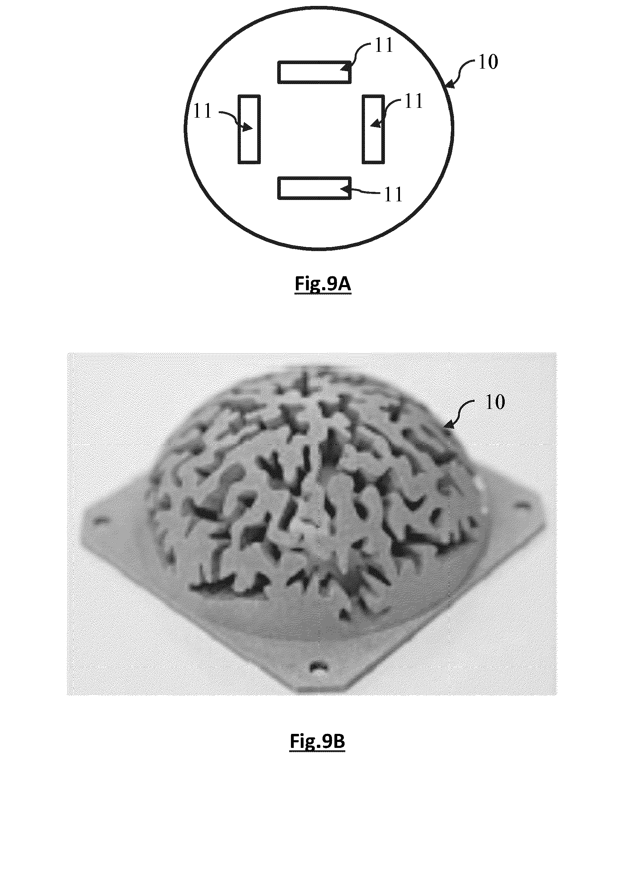

Les figures 8B, 8D et 8F montrent une image de la source obtenue en mettant en œuvre plusieurs dizaines d'itérations de l'algorithme précédemment décrit, respectivement
- en ne prenant en compte uniquement les interactions simples : l'image de la source est obtenue selon la première modalité, sur la base de 584 interactions détectées ;
- en compte uniquement les interactions multiples : l'image de la source est obtenue selon la deuxième modalité, sur la base de 104 interactions multiples détectées ;
- en prenant en compte à la fois les interactions simples et multiples. l'image de la source est obtenue en combinant les première et deuxième modalités. Selon une possibilité, la caméra comporte plusieurs matériaux de détection, répartis selon différents plans, chaque matériau de détection 11 étant situé face à un collimateur de type masque codé sphérique. Une telle variante est illustrée sur les figures 9A et 9B. Selon cette variante, le premier champ d'observation Ω1 comporte différentes composantes, réparties face à chaque matériau de détection 11. La figure 9B illustre un masque codé 10 hémisphérique. Le masque codé sphérique est formé par l'assemblage de deux masques codés hémisphériques. Le deuxième champ d'observation Ω2 comporte l'ensemble des premiers champs d'observation Ω1et s'étend entre ces derniers selon une surface sphérique.

## Revendications

1. Procédé d'une estimation de positions de sources irradiantes dans un champ d'observation (Ω, Ω2), à l'aide d'une gamma caméra (1), la gamma caméra comportant :
- un matériau de détection (11) ;
- des pixels (12), répartis selon une surface de détection du matériau de détection, chaque pixel étant configuré pour former un signal de détection sous l'effet d'une détection d'une interaction d'un photon ionisant dans le matériau de détection ;
- un collimateur, de type masque codé, disposé face au matériau de détection, et définissant un premier champ d'observation (Ω1), inclus dans le champ d'observation de la gamma caméra ;
- une unité de localisation (14), configurée pour assigner une position à chaque interaction dans le matériau de détection, à partir du signal de détection généré par ladite interaction;
- une unité de spectrométrie (15), configurée pour assigner une énergie à chaque interaction détectée, à partir du signal de détection généré par ladite interaction ;
- une unité de coïncidence (16), configurée pour identifier chaque interaction comme une interaction simple ou une interaction multiple, une interaction multiple étant formées de deux interactions détectées en coïncidence temporelle ;
- une mémoire (17), configurée pour mémoriser des paramètres d'interactions détectées;
le procédé comportant les étapes suivantes:
- a) acquisition de signaux de détection par les pixels (12) durant une période d'acquisition, chaque signal de détection étant associé à une interaction détectée ;
- b) en fonction des signaux de détection, assignation d'une position et d'une énergie (*xₖ, yₖ, E'ₖ*) à chaque interaction détectée ;
- c) identification de chaque interaction détectée comme étant une interaction simple ou une interaction multiple ;
- d) mémorisation, par la mémoire, des paramètres de chaque interaction, simple et multiple, les paramètres de chaque interaction comportant la position et l'énergie de ladite interaction ;
- e) sélection d'un isotope (i) parmi une liste d'isotopes ;
le procédé étant **caractérisé en ce qu'**il comportant également
- f) en fonction de l'énergie assignée à chaque interaction, simple et multiple, calcul d'une probabilité d'émission par l'isotope (*p*(*E'ₖ*|*s, i*) *, p*(*E'* _{1*k*} + *E'* _{2*k*} |*s, i*) ) ;
- g) à partir des paramètres de chaque interaction, simple et multiple, calcul d'une probabilité d'émission du photon ayant généré l'interaction, depuis différents points du champ d'observation (*p*(*xₖ, yₖ*|*X*₁, *Y*₁, *s* ), *p*(*x*₁*ₖ, y*₁*ₖ, z*₁*ₖ, x*₂*ₖ, y*₂*ₖ, z*₂*ₖ, E'* ₁*ₖ, E'* _{2*k*}|*X*₂, *Y*₂, *Z*₂, *s* );
- h) prise en compte d'une probabilité a priori d'émission d'un photon pour l'isotope sélectionné, depuis les différents points du champ d'observation (*p*(*X*₁, *Y*₁, *i), p*(*X*₂*, Y*₂*, Z*₂, *i*));
- i) en fonction des probabilités résultant de g) et h), calcul d'une distribution spatiale de l'intensité d'émission dans le premier champ d'observation (*O*^{(*n*)} (*X*₁*, Y*₁, *i*)) pour l'isotope sélectionné lors de l'étape e).

2. Procédé selon la revendication 1, dans lequel les étapes h) et i) sont effectuées de façon itérative, de telle sorte qu'à chaque itération :
- l'étape h) comporte une prise en compte d'une distribution spatiale de l'intensité d'émission de l'isotope initiale (*O*⁽⁰⁾ (*X*₁, *Y*₁, *i*)) ou résultant d'une itération précédente (*O*^{(*n*-1)}(*X*₁, *Y*₁, *i*));
- l'étape i) comporte une mise à jour de la distribution spatiale de l'intensité d'émission pour l'isotope sélectionné en fonction :
• de la probabilité a priori d'émission résultant de l'étape h) de la même itération ;
• des probabilités résultant des étapes f) et g).

3. Procédé selon l'une quelconque des revendications précédentes, dans lequel lors de l'étape e), l'isotope est
- sélectionné en fonction des énergies respectivement assignées à différentes interactions détectées ;
- ou sélectionné arbitrairement.

4. Procédé selon l'une quelconque des revendications précédentes, dans lequel les étapes f) à i) sont effectuées successivement pour différents isotopes sélectionnés.

5. Procédé selon l'une quelconque des revendications précédentes, dans lequel l'étape f) est mise en œuvre en calculant :
- une probabilité (*p*(*E*|*i,s =* + )) que le photon ayant généré l'interaction soit un photon direct, émis par l'isotope, selon une énergie d'émission de l'isotope et ayant atteint le matériau de détection en conservant l'énergie d'émission, sans traverser une partie absorbante du collimateur ;
- une probabilité (*p*(*E*|*i,s =* - )) que le photon ayant généré l'interaction soit un photon indirect, émis par l'isotope, selon une énergie d'émission de l'isotope, et ayant atteint le matériau de détection avec une énergie inférieure à l'énergie d'émission et/ou en traversant une partie absorbante du collimateur.

6. Procédé selon la revendication 5, dans lequel l'étape f) comporte une prise en compte, pour chaque énergie d'émission de l'isotope :
- une distribution de probabilités de détection d'une interaction, dans le matériau détecteur, selon différentes énergies, en supposant que le photon ayant généré l'interaction est un photon direct ;
- une distribution de probabilités de détection d'une interaction, dans le matériau détecteur, selon différentes énergies, en supposant que le photon ayant généré l'interaction est un photon indirect ;
les distributions de probabilités de détection étant préalablement calculées en considérant une interaction simple et une interaction multiple.

7. Procédé selon l'une quelconque des revendications précédentes, dans lequel l'étape g) comporte :
- lorsque l'interaction est simple, sélection d'un premier modèle de réponse spatiale de la caméra, la probabilité de position d'émission depuis différents points du premier champ d'observation (*p*(*x, y*|*X, Y, s*)) étant déterminée en fonction du premier modèle de réponse spatiale et de la position de l'interaction dans le matériau détecteur ;
- lorsque l'interaction est multiple, sélection d'un deuxième modèle de réponse spatiale de la caméra, la probabilité de position d'émission depuis différents points du champ d'observation (*p*(*x*₁, *y*₁, *z*₁, *x*₂, *y*₂, *z*₂, *E*₁, *E*₂|*E*, *X, Y, s*)) étant déterminée en fonction du deuxième modèle de réponse spatiale et de l'énergie ainsi que la position des interactions détectées en coïncidence temporelle formant l'interaction multiple dans le matériau détecteur.

8. Procédé selon la revendication 7, dans lequel le premier modèle de réponse spatiale détermine, pour différentes positions bidimensionnelles d'interactions simples (*x, y*), établies parallèlement à la surface de détection, une probabilité de détection d'un photon émis à partir de différents points du premier champ d'observation (Ω1), chaque interaction simple étant une interaction non considérée comme multiple.

9. Procédé selon la revendication 7, dans lequel le deuxième modèle de réponse spatiale détermine, pour différentes positions tridimensionnelles d'interactions détectées en coïncidence temporelle (*x*₁*, y*₁*, z*₁*, x*₂*, y*₂*, z*₂) , formant l'interaction multiple, et pour différentes valeurs d'énergie desdites interactions (*E*₁, *E*₂), une probabilité de détection d'un photon émis à partir de différents points du champ d'observation (Ω).

10. Gamma caméra (1), destinée à détecter une présence de sources irradiantes (5) dans un champ d'observation (Ω), la gamma caméra comportant :
- un matériau de détection (11) ;
- des pixels (12), répartis selon une surface de détection du matériau de détection, chaque pixel étant configuré pour former un signal de détection sous l'effet d'une détection d'une interaction d'un photon ionisant dans le matériau de détection ;
- un collimateur disposé face au matériau de détection, et définissant un premier champ d'observation (Ω1), inclus dans le champ d'observation de la gamma caméra ;
- une unité de localisation (14), configurée pour assigner une position à chaque interaction dans le matériau de détection, à partir du signal de détection généré par ladite interaction;
- une unité de spectrométrie (15), configurée pour assigner une énergie à chaque interaction détectée, à partir du signal de détection généré par ladite interaction ;
- une unité de coïncidence (16), configurée pour identifier chaque interaction comme une interaction simple ou une interaction multiple, une interaction multiple étant formées de deux interactions de diffusion détectées en coïncidence temporelle ;
- une mémoire (17), configurée pour mémoriser des paramètres d'interactions détectées;
- une unité de traitement (18), configurée pour traiter les interactions mémorisées dans la mémoire, l'unité de traitement étant configurée pour mettre en œuvre les étapes e) à i) d'un procédé selon l'une quelconque des revendications précédentes.

## Patentansprüche

1. Verfahren zum Schätzen von Positionen von Bestrahlungsquellen in einem Beobachtungsfeld (Ω,Ω2) unter Verwendung einer Gammakamera (1), wobei die Gammakamera umfasst:
- ein Detektionsmaterial (11);
- Pixel (12), die entlang einer Detektionsfläche des Detektionsmaterials verteilt sind, wobei jedes Pixel dazu ausgelegt ist, unter der Wirkung einer Detektion einer Interaktion eines ionisierenden Photons in dem Detektionsmaterial ein Detektionssignal zu bilden;
- einen Kollimator vom Typ codierter Maske, der dem Detektionsmaterial gegenüber angeordnet ist und ein erstes Beobachtungsfeld (Ω1) definiert, das in dem Beobachtungsfeld der Gammakamera enthalten ist;
- eine Lokalisierungseinheit (14), die dazu ausgelegt ist, jeder Interaktion in dem Detektionsmaterial ausgehend von dem durch die Interaktion erzeugten Detektionssignal eine Position zuzuweisen;
- eine Spektrometrieeinheit (15), die dazu ausgelegt ist, jeder detektierten Interaktion ausgehend von dem durch die Interaktion erzeugten Detektionssignal eine Energie zuzuweisen;
- eine Koinzidenzeinheit (16), die dazu ausgelegt ist, jede Interaktion als eine einzelne Interaktion oder eine mehrfache Interaktion zu identifizieren, wobei eine mehrfache Interaktion durch zwei Interaktionen gebildet wird, die in zeitlicher Koinzidenz detektiert werden;
- einen Speicher (17), der dazu ausgelegt ist, detektierte Interaktionsparameter zu speichern; wobei das Verfahren die folgenden Schritte umfasst:
- a) Erfassen von Detektionssignalen durch die Pixel (12) während einer Erfassungsperiode, wobei jedes Detektionssignal mit einer detektierten Interaktion assoziiert ist;
- b) in Abhängigkeit von den Detektionssignalen Zuweisen einer Position und einer Energie (xₖ,yₖ,E'ₖ) jeder detektierten Interaktion;
- c) Identifizieren jeder detektierten Interaktion als eine einzelne Interaktion oder eine mehrfache Interaktion;
- d) Speichern der Parameter jeder Interaktion, einzelne und mehrfache, durch den Speicher, wobei die Parameter jeder Interaktion die Position und die Energie der Interaktion umfassen;
- e) Auswählen eines Isotops (i) aus einer Liste von Isotopen;
wobei das Verfahren **dadurch gekennzeichnet ist, dass** es ebenfalls umfasst:
- f) in Abhängigkeit von der Energie, die jeder Interaktion, einzelne und mehrfache, zugewiesen wird, Berechnen einer Emissionswahrscheinlichkeit durch das Isotop (p(E'ₖ|s,i),p(E'₁ₖ+E'₂ₖ|s,i));
- g) ausgehend von Parametern jeder Interaktion, einzelne und mehrfache, Berechnen einer Emissionswahrscheinlichkeit des Photons, das die Interaktion erzeugt hat, aus verschiedenen Punkten des
Beobachtungsfeldes (p(xₖ,yₖ|X₁,Y₁,s),p(x₁ₖ,y₁ₖ,z₁ₖ,x₂ₖ,y₂ₖ,z₂ₖ,E'₁ₖ,E'₂ₖ|X₂,Y₂,Z₂,s);
- h) Berücksichtigen der a-priori-Emissionswahrscheinlichkeit eines Photons für das ausgewählte Isotop aus den verschiedenen Punkten des Beobachtungsfeldes (p(X₁,Y₁,i),p(X₂,Y₂,Z₂,i));
- i) in Abhängigkeit von den sich aus g) und h) ergebenden Wahrscheinlichkeiten Berechnen einer räumlichen Verteilung der Emissionsintensität im ersten Beobachtungsfeld (0⁽ⁿ⁾,X₁,Y₁,i)) für das im Schritt e) ausgewählte Isotop.

2. Verfahren nach Anspruch 1, wobei die Schritte h) und i) iterativ durchgeführt werden, so dass bei jeder Iteration:
- Schritt h) ein Berücksichtigen einer räumlichen Verteilung der Emissionsintensität des Ausgangsisotops (0⁽⁰⁾(X₁,Y₁,i)) umfasst oder aus einer vorherigen Iteration (0⁽ⁿ⁻¹⁾(X₁,Y₁,i)) resultiert;
- Schritt i) eine Aktualisierung der räumlichen Verteilung der Emissionsintensität für das ausgewählte Isotop umfasst, in Abhängigkeit von:
• der a-priori-Emissionswahrscheinlichkeit, die aus Schritt h) derselben Iteration resultiert;
• Wahrscheinlichkeiten, die aus den Schritten f) und g) resultieren.

3. Verfahren nach einem der vorhergehenden Ansprüche, wobei in Schritt e) das Isotop
- in Abhängigkeit der jeweiligen Energien, die verschiedenen detektierten Interaktionen zugewiesen sind, ausgewählt wird;
- oder zufällig ausgewählt wird.

4. Verfahren nach einem der vorhergehenden Ansprüche, wobei die Schritte f) bis i) nacheinander für verschiedene ausgewählte Isotope durchgeführt werden.

5. Verfahren nach einem der vorhergehenden Ansprüche, wobei Schritt f) ausgeführt wird durch Berechnen:
- einer Wahrscheinlichkeit (p(E\i,s = + )), dass das Photon, das die Interaktion erzeugt hat, ein direktes Photon ist, das von dem Isotop gemäß einer Emissionsenergie des Isotops emittiert wird, und das das Detektionsmaterial unter Beibehaltung der Emissionsenergie erreicht hat, ohne einen absorbierenden Teil des Kollimators zu durchqueren;
- einer Wahrscheinlichkeit (p(E\i,s = - )), dass das Photon, das die Interaktion erzeugt hat, ein indirektes Photon ist, das von dem Isotop gemäß einer Emissionsenergie des Isotops emittiert wird, und das das Detektionsmaterial mit einer Energie, die niedriger als die Emissionsenergie ist, und/oder unter Durchquerung eines absorbierenden Teils des Kollimators erreicht hat.

6. Verfahren nach Anspruch 5, wobei Schritt f) umfasst für jede Emissionsenergie des Isotops ein Berücksichtigen:
- einer Wahrscheinlichkeitsverteilung der Detektion einer Interaktion in dem Detektionsmaterial gemäß verschiedenen Energien, unter der Annahme, dass das Photon, das die Interaktion erzeugt hat, ein direktes Photon ist;
- einer Wahrscheinlichkeitsverteilung der Detektion einer Interaktion in dem Detektionsmaterial gemäß verschiedenen Energien, unter der Annahme, dass das Photon, das die Interaktion erzeugt hat, ein indirektes Photon ist;
wobei die Wahrscheinlichkeitsverteilungen der Detektion zuvor unter Berücksichtigung einer einzelnen Interaktion und einer mehrfachen Interaktion berechnet wurden.

7. Verfahren nach einem der vorhergehenden Ansprüche, wobei Schritt g) umfasst:
- wenn die Interaktion einzeln ist, Auswählen eines ersten räumlichen Antwortmodells der Kamera, wobei die Wahrscheinlichkeit der Emissionsposition aus verschiedenen Punkten des ersten Beobachtungsfeldes (p(x,y|X,Y,s)) in Abhängigkeit von dem ersten räumlichen Antwortmodell und der Position der Interaktion in dem Detektionsmaterial bestimmt wird;
- wenn die Interaktion mehrfach ist, Auswählen eines zweiten räumlichen Antwortmodells der Kamera, wobei die Wahrscheinlichkeit der Emissionsposition aus verschiedenen Punkten des Beobachtungsfeldes (p(x₁,y₁,z₁,x₂,y₂,z₂,E₁,E₂|E,X,Y,s)) in Abhängigkeit von dem zweiten räumlichen Antwortmodell und der Energie sowie der Position der detektierten Interaktionen in zeitlicher Koinzidenz bestimmt werden, die die mehrfache Interaktion in dem Detektionsmaterial bildet.

8. Verfahren nach Anspruch 7, wobei das erste räumliche Antwortmodell für unterschiedliche zweidimensionale Positionen einzelner Interaktionen (x,y), die parallel zu der Detektionsfläche erstellt sind, eine Wahrscheinlichkeit der Detektion eines Photons bestimmt, das von verschiedenen Punkten des ersten Beobachtungsfelds (Ω1) emittiert wird, wobei jede einzelne Interaktion eine Interaktion ist, die nicht als mehrfach betrachtet wird.

9. Verfahren nach Anspruch 7, wobei das zweite räumliche Antwortmodell für unterschiedliche dreidimensionale Positionen detektierter Interaktionen in zeitlicher Koinzidenz (x₁,y₁,z₁,x₂,y₂,z₂) und für unterschiedliche Energiewerte dieser Interaktionen (E₁,E₂) eine Wahrscheinlichkeit der Detektion eines von verschiedenen Punkten des Beobachtungsfeldes emittierten Photons (Ω) bestimmt.

10. Gammakamera (1), die dazu bestimmt ist, ein Vorhandensein von Strahlungsquellen (5) in einem Beobachtungsfeld (Ω) zu detektieren, wobei die Gammakamera umfasst:
- ein Detektionsmaterial (11);
- Pixel (12), die entlang einer Detektionsfläche des Detektionsmaterials verteilt sind, wobei jedes Pixel dazu ausgelegt ist, unter der Wirkung einer Detektion einer Interaktion eines ionisierenden Photons in dem Detektionsmaterial ein Detektionssignal zu bilden;
- einen Kollimator, der dem Detektionsmaterial gegenüber angeordnet ist und ein erstes Beobachtungsfeld (Ω1) definiert, das in dem Beobachtungsfeld der Gammakamera enthalten ist;
- eine Lokalisierungseinheit (14), die dazu ausgelegt ist, jeder Interaktion in dem Detektionsmaterial ausgehend von dem durch die Interaktion erzeugten Detektionssignal eine Position zuzuweisen;
- eine Spektrometrieeinheit (15), die dazu ausgelegt ist, jeder detektierten Interaktion ausgehend von dem durch die Interaktion erzeugten Detektionssignal eine Energie zuzuweisen;
- eine Koinzidenzeinheit (16), die dazu ausgelegt ist, jede Interaktion als eine einzelne Interaktion oder eine mehrfache Interaktion zu identifizieren, wobei eine mehrfache Interaktion durch zwei Diffusionsinteraktionen gebildet wird, die in zeitlicher Koinzidenz detektiert werden;
- einen Speicher (17), der dazu ausgelegt ist, detektierte Interaktionsparameter zu speichern;
- eine Verarbeitungseinheit (18), die dazu ausgelegt ist, die in dem Speicher gespeicherten Interaktionen zu verarbeiten, wobei die Verarbeitungseinheit dazu ausgelegt ist, die Schritte e) bis i) eines Verfahrens nach einem der vorhergehenden Ansprüche auszuführen.

## Claims

1. A method of estimating positions of irradiating sources in a field of observation (Ω, Ω2), using a gamma camera (1), the gamma camera comprising:
- a detection material (11);
- pixels (12) distributed over a detection surface of the detection material, each pixel being configured to form a detection signal as a result of the detection of an interaction of an ionizing photon in the detection material;
- a collimator, positioned to face the detection material, and defining a first field of observation (Ω1), included in the field of observation of the gamma camera;
- a location unit (14), configured to assign a position to each interaction in the detection material, on the basis of the detection signal generated by said interaction;
- a spectrometry unit (15), configured to assign an energy to each interaction detected, on the basis of the detection signal generated by said interaction;
- a coincidence unit (16), configured to identify each interaction as a single or multiple interaction, a multiple interaction being formed from two scattering interactions detected in temporal coincidence;
- a memory (17), configured to store detected interaction parameters;
the method comprising the following steps:
- a) acquiring detection signals by the pixels (12) within an acquisition period, each detection signal being associated with a detected interaction;
- b) on the basis of the detection signals, assigning a position and an energy (*xₖ*, *yₖ*, *E'ₖ*) to each interaction detected;
- c) identifying each detected interaction as a single or multiple interaction;
- d) using the memory to store the parameters of each interaction, whether single or multiple, the parameters of each interaction comprising the position and energy of said interaction;
- e) selecting an isotope (*i*) from a list of isotopes;
the method being **characterized in that** it also comprises:
- f) according to the energy assigned to each interaction, whether single or multiple, calculating a probability of emission by the isotope (*p*(*E'ₖ*|*s*, *i*) ,*p*(*E'* _{1*k*} + *E'* _{2*k*}|*s*, *i*) );
- g) on the basis of the parameters of each interaction, whether single or multiple, calculating a probability of emission of the photon that has generated the interaction, from different points in the field of observation (*p*(*xₖ*, *yₖ*|*X*₁, *Y*₁, *s* ), *p*(*x*_{1*k*}, *y*_{1*k*}, *z*_{1*k*}, *x*_{2*k*}, *y*_{2*k*}, *z*_{2*k*}, *E'* _{1*k*}, *E'* _{2*k*}|*X*₂, *Y*₂, *Z*₂, *s* );
- h) taking into account an a priori probability of emission of a photon for the selected isotope, from the different points of the field of observation (*p*(*X*₁, *Y*₁, *i*), *p*(*X*₂, *Y*₂, *Z*₂, *i*));
i) according to the probabilities resulting from g) and h), calculating a spatial distribution of emission intensity in the first field of observation (*O*^{(*n*)} (*X*₁, *Y*₁, *i*)) for the isotope selected in step e).

2. The method as claimed in claim 1, wherein steps h) and i) are executed iteratively, so that on each iteration:
- step h) comprises taking into account a spatial distribution of the emission intensity of the isotope, whether initial (*O*⁽⁰⁾ (*X*₁, *Y*₁, *i*)) or resulting from a preceding iteration (*O*^{(*n*-1)} (*X*₁, *Y*₁, *i*));
- step i) comprises updating the spatial distribution of the emission intensity for the selected isotope, according to:
• the a priori probability of emission resulting from step h) of the same iteration;
• the probabilities resulting from steps f) and g).

3. The method as claimed in any of the preceding claims, wherein, in step e), the isotope is:
- selected according to the energies respectively assigned to different interactions detected;
- or selected arbitrarily.

4. The method as claimed in any of the preceding claims, wherein steps f) to i) are executed successively for different isotopes selected.

5. The method as claimed in any of the preceding claims, wherein step f) is executed by calculating:
- a probability (*p*(*E*|*i*, *s* = + )) that the photon that has generated the interaction is a direct photon that was emitted by the isotope according to an emission energy of the isotope, and that has reached the detection material while conserving the emission energy, without passing through an absorbent part of the collimator;
- a probability (*p*(*E*|*i*, *s* = - )) that the photon that has generated the interaction is an indirect photon that was emitted by the isotope according to an emission energy of the isotope, and that has reached the detection material with an energy less than the emission energy and/or by passing through an absorbent part of the collimator.

6. The method as claimed in claim 5, wherein step f) comprises taking into account, for each emission energy of the isotope:
- a distribution of probabilities of detection of an interaction in the detector material at different energies, on the assumption that the photon that has generated the interaction is a direct photon;
- a distribution of probabilities of detection of an interaction in the detector material at different energies, on the assumption that the photon that generated the interaction is an indirect photon;
the distributions of probabilities of detection having been calculated in advance for the cases of a single interaction and a multiple interaction.

7. The method as claimed in any of the preceding claims, wherein step g) comprises:
- if the interaction is single, selecting a first spatial response model of the camera, the probability of the emission position from different points of the first field of observation (*p*(*x*, *y*|*X*, *Y*, *s* )) being determined according to the first spatial response model and according to the position of the interaction in the detector material;
- if the interaction is multiple, selecting a second spatial response model of the camera, the probability of the emission position from different points of the field of observation (*p*(*x*₁, *y*₁, *z*₁, *x*₂, *y*₂, *z*₂, *E*₁, *E*₂|*E*, *X, Y, s*)) being determined according to the second spatial response and energy model and according to the position of the interactions detected in temporal coincidence and forming the multiple interaction in the detector material.

8. The method as claimed in claim 7, wherein the first spatial response model can determine, for different two-dimensional positions of single interactions (*x,y*) established parallel to the detection surface, a probability of detection of a photon emitted from different points of the first field of observation (Ω1), each single interaction being an interaction not considered to be multiple.

9. The method as claimed in claim 7, wherein the second spatial response model determines, for different three-dimensional positions of interactions detected in temporal coincidence (*x*₁, *y*₁, *z*₁, *x*₂, *y*₂, *z*₂) , forming the multiple interaction, and for different energy values of said interactions (*E*₁, *E*₂)), a probability of detection of a photon emitted from different points of the field of observation (Ω).

10. A gamma camera (1), designed to detect a presence of irradiating sources (5) in a field of observation (Ω), the gamma camera comprising:
- a detection material (11);
- pixels (12) distributed over a detection surface of the detection material, each pixel being configured to form a detection signal as a result of the detection of an interaction of an ionizing photon in the detection material;
- a collimator, positioned to face the detection material, and defining a first field of observation (Ω1), included in the field of observation of the gamma camera;
- a location unit (14), configured to assign a position to each interaction in the detection material, on the basis of the detection signal generated by said interaction;
- a spectrometry unit (15), configured to assign an energy to each interaction detected, on the basis of the detection signal generated by said interaction;
- a coincidence unit (16), configured to identify each interaction as a single or multiple interaction, a multiple interaction being formed from two scattering interactions detected in temporal coincidence;
- a memory (17), configured to store detected interaction parameters;
- a processing unit (18), configured to process the interactions stored in the memory, the processing unit being configured to implement steps e) to i) of a method according to any of the preceding claims.
